(19) Europäisches Patentamt
European Patent Office
Office européen des brevets

(11) EP 1 430 787 A1

(12) **EUROPEAN PATENT APPLICATION**
published in accordance with Art. 158(3) EPC

(43) Date of publication:
**23.06.2004 Bulletin 2004/26**

(21) Application number: **02775253.4**

(22) Date of filing: **27.09.2002**

(51) Int Cl.7: **A23K 1/16**, C05G 3/00,
A23L 1/30

(86) International application number:
**PCT/JP2002/010102**

(87) International publication number:
**WO 2003/028475 (10.04.2003 Gazette 2003/15)**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **28.09.2001 JP 2001304708**

(71) Applicant: **The Nisshin OilliO, Ltd.**
**Tokyo 104-8285 (JP)**

(72) Inventors:
- **MURANO, Yoshihiro,**
  **c/o THE NISSHIN OILLIO, LTD.**
  **Yokosuka-Shi, Kanagawa 239-0832 (JP)**
- **SHINOHARA, Gou,**
  **c/o THE NISSHIN OILLIO, LTD.**
  **Yokosuka-Shi, Kanagawa 239-0832 (JP)**
- **KUNO, Noriyasu, c/o THE NISSHIN OILLIO, LTD.**
  **Yokosuka-Shi, Kanagawa 239-0832 (JP)**

(74) Representative: **Bawden, Peter Charles**
**Bawden & Associates,**
**4 The Gatehouse**
**2 High Street**
**Harpenden, Hertfordshire AL5 2TH (GB)**

(54) **FEEDS AND FERTILIZERS CONTAINING PENTACYCLIC TRITERPENES**

(57) The present invention relates to a feed, a fertilizer, a melanogenesis- inhibitory agent for animals and plants and a blackening/browning-inhibitory composition for animals and plants, each comprising, as an effective component, at least one member selected from the group consisting of pentacyclic triterpenes, physiologically acceptable salts thereof and derivatives thereof, which have an excellent melanogenesis-inhibitory effect.



Printed by Jouve, 75001 PARIS (FR)

## Description

### Background of the Invention

The present invention relates to a demelanizing agent as well as a blackening-inhibitory/browning-inhibitory composition, for animals and plants, which is effective for the prevention of any discoloration and the freshness retention of, for instance, animal's and plant's bodies and/or a part thereof and/or foods containing, as ingredients thereof, a part of animal's and plant's bodies.

There have been known that a variety of chemical reactions are involved in the maintenance of animal's and plant's life and as a result, various kinds of dyestuff compounds are produced through the reactions. In particular, melanin tinged with a black to brownish color has been known to be a compound produced by all sorts of animals and plants. Thus, it has been found that such melanin is a causative substance for various problems and, for instance, it becomes a cause of the blackening and browning phenomena of perishable foods such as meat, fish and vegetables as well as the dark color-developing and color-fading phenomena of, for instance, pet animals and aquarium fishes due to blackening or the like.

The color-fading and browning of, for instance fishery products, processed marine products, processed livestock products, vegetables and fruits are not favorable for the consumers' taste because of their bad appearance and therefore, they would be responsible for the reduction in the commercial value of these foods, irrespective of their freshness in themselves. For example, the body colors of crustaceans such as shrimps and crabs are gradually blackened during storing the same. This is because the tyrosine present within the bodies of the crustaceans is influenced by the oxidation action of a co-existing oxidase (tyrosinase) and as a result, a black melanin dyestuff is produced. Conventionally, there have been used, for instance, vitamin C, sulfites and phytic acid to cope or deal with such blackening. However, the residual $SO_2$ in foods is quite strictly regulated on the basis of the Food Sanitation Act and therefore, any sulfite should be used while taking into consideration this fact. Moreover, phytic acid per se has a low pH and therefore, it is effective for the prevention of any discoloration and the reduction of the acidity of low pH foods such as vegetables, but it is less effective for neutral foods such as fishery products. Furthermore, it has been reported, in an academic society, that kojic acid (tyrosinase-inhibitor) derived from the enzyme product of rice Aspergillus has carcinogenic properties and for this reason, one should presently use a sulfite.

In addition, it has in general been said that cultivated fishes such as red sea breams, flatfishes and Fugu rubripes have meat quality and appearance inferior to those observed for the naturally-occurring fishes and therefore, the commercial values thereof are inferior to that of the latter. More specifically, natural red sea breams live in the proximity to the bottom of the sea, which is struck by almost no sunlight, they are thus free of any suntan, they are used to eat fresh crustaceans such as fresh shrimps and therefore, the surface of their bodies are tinted with lovely pink. On the other hand, the cultivated red sea breams live in the vicinity to the surface of the sea, they are directly struck by solar rays, unsound krills for redyeing are fed thereto and accordingly, the cultivated red sea breams would be blackened because of an increased melanin content due to the suntan and the intake of unsound crustaceans. Melanin is thus deposited not only on the body surface, but also the muscles of such cultivated fishes. For instance, when a red sea bream is cooked into sliced raw fish, any black stripe is not observed in the slices of naturally occurring red sea bream, but it is clearly observed in those of the cultivated one. It has been known that covering the fish preserve with a light-shielding film (Matsui, et al., Bulletin of Fisheries Society Japan, 1999, 58: 1459) can solve these problems. In the existing circumstances, however, the use of only such a light-shielding film may permit the elimination of the melanin-deposition in muscles to some extent, but black lines are still conspicuous. In this respect, it is a matter of course that the presence of black lines in muscles may reduce the commercial value of the cultivated fishes.

Alternatively, plant's tissues or the like containing polyphenols usually include enzymes capable of oxidizing the polyphenols. Examples of such enzymes are tyrosinase and laccase and these enzymes oxidize the polyphenols present in such tissues and the oxidized products of these polyphenols undergo oxidative polymerization to thus form melanin. This is a cause of any browning phenomenon observed when a fresh plant's body is damaged. For instance, it has been well known that grated or skin-peeled apples or bananas are allowed to stand for a period of time, the polyphenols and the oxidation enzymes therefor present therein are exposed to the air and undergo a reaction to thus produce melanin and as a result, the apples and bananas undergo discoloration. As a means for preventing the occurrence of any browning, it has long been known to use an aqueous common salt and lemon juice, but such a method may impair the flavor and taste of these foods and is not a means for improving the commercial value thereof.

### Disclosure of the Invention

It is accordingly an object of the present invention to provide a demelanizing agent as well as a blackening-inhibitory/browning-inhibitory composition, for animals and plants, which is quite effective for controlling the occurrence of any blackening and browning in animals and plants.

The inventors of this invention have conducted various studies to solve the foregoing problems, have found that pentacyclic triterpenes, physiologically acceptable salts and/or derivatives thereof show excellent melanogenesis-inhibitory effects and that when these substances are used in combination with an antioxidant, an organic acid and salts thereof and phosphoric acid and salts thereof, the resulting composition shows a stronger blackening-inhibitory/ browning-inhibitory effect and have thus completed the present invention.

More specifically, the present invention relates to a melanogenesis- inhibitory agent used in animals and plants comprising, as an effective component, at least one member selected from the group consisting of pentacyclic triterpenes and physiologically acceptable salts and/or derivatives thereof, the present invention preferably relates to such a melanogenesis-inhibitory agent used in animals and plants wherein the pentacyclic triterpene component, as an effective component, is at least one member selected from the group consisting of oleanane triterpenes, ursane triterpenes, lupane triterpenes and physiologically acceptable salts and/or derivatives thereof, and the present invention more preferably relates to such a melanogenesis-inhibitory agent used in animals and plants comprising, as an effective component, at least one member selected from the group consisting of oleanane triterpenes such as maslinic acid, erythrodiol and physiologically acceptable salts and/or derivatives thereof; ursane triterpenes such as uvaol, ursolic acid and physiologically acceptable salts and/or derivatives thereof; and lupane triterpenes such as betulinic acid and betulin and/or physiologically acceptable salts thereof. The present invention also relates to a melanogenesis-inhibitory agent used in animals and plants comprising, as an effective component, the defatted product of an olive plant or the extract of an olive plant. The melanogenesis-inhibitory agent for animals and plants according to the present invention is quite effective for the prevention of any discoloration and/or the freshness retention of foods such as meat, fishery products, vegetables and fruits and plants such as foliage plants, garden plants, cereals and seeds; and the prevention of any darkening and color-fading due to, for instance, blackening of pet animals and aquarium fishes or the like since the agent has an excellent melanogenesis-inhibitory effect. Moreover, the effective components can likewise be obtained from naturally occurring materials and therefore, the agent of the invention can safely be used.

Further the present invention relates to a raw material for preparing a melanogenesis-inhibitory agent used in animals and plants comprising at least one member selected from the group consisting of pentacyclic triterpenes and physiologically acceptable salts and/or derivatives thereof. The raw material for preparing a melanogenesis-inhibitory agent used in animals and plants according to the present invention may be either those derived from naturally occurring materials or artificially synthesized ones. These raw materials may be used for the production of a melanogenesis-inhibitory agent for animals and plants as well as a blackening-inhibitory /browning-inhibitory composition according to the present invention.

In addition, the present invention likewise relates to a blackening-inhibitory/browning-inhibitory composition comprising at least one member selected from the group consisting of pentacyclic triterpenes and physiologically acceptable salts and/or derivatives thereof. The present invention also relates to a blackening-inhibitory/ browning-inhibitory composition for use in animals and plants comprising, as an effective component, the defatted product of an olive plant or the extract of an olive plant. The present invention preferably relates to a blackening-inhibitory/browning-inhibitory composition comprising at least one member selected from the group consisting of pentacyclic triterpenes and physiologically acceptable salts and/or derivatives thereof; an antioxidant; an organic acid and a salt thereof; and/ or phosphoric acid and a salt thereof.

The present invention also relates to a feed or a fertilizer comprising, as a melanogenesis-inhibitory component for animals and plants, at least one member selected from the group consisting of pentacyclic triterpenes and physiologically acceptable salts and/or derivatives thereof.

The present invention also relates to a feed comprising, as an effective component, the defatted product of an olive plant or the extract of an olive plant.

Moreover, the present invention relates to a feed comprising fish meal and/or soybean grounds; maslinic acid or ursolic acid as an effective component; and an antioxidant selected from the group consisting of vitamin C, vitamin E and isoflavone.

Furthermore, the present invention relates to a fertilizer comprising, as an effective component, the defatted product of an olive plant or the extract of an olive plant.

In addition the present invention further relates to a food or beverage comprising an animal or a plant raised by administering or applying a compound selected from the group consisting of pentacyclic triterpenes and physiologically acceptable salts and derivatives thereof till the blackening/browning-inhibitory index of the animal or plant reaches not less than 115.

The present invention likewise relates to a method for preparing a feed or a fertilizer, which comprises the step of treating olive plants or dried products, pulverized products or defatted products thereof with water and/or an organic solvent to thus give an extract having a total content of pentacyclic triterpenes, physiologically acceptable salts and derivatives thereof ranging from 0.1 to 99.99% by mass.

Moreover, the present invention also relates to a method for preventing or improving any blackening and/or browning of animal and plant bodies, which comprises the step of administering or applying, to animals and plants, a

compound selected from the group consisting of pentacyclic triterpenes and physiologically acceptable salts and derivatives thereof.

Further the present invention relates to a method for preventing or improving any blackening and/or browning of animal and plant bodies, which comprises (a) a step of dissolving a compound selected from the group consisting of pentacyclic triterpenes and physiologically acceptable salts and derivatives thereof in water to form a solution of the compound and a step of (b) immersing an animal or a plant in the solution prepared in the step (a).

The present invention also relates to a method for preventing the production of melanin in an animal or plant body, which comprises the step of administering or applying, to the animal or plant, a compound selected from the group consisting of pentacyclic triterpenes and physiologically acceptable salts and derivatives thereof.

## Best Mode for Carrying Out the Invention

The present invention relates to a melanogenesis-inhibitory agent for use in animals and plants, which comprises, as an effective component, at least one member selected from the group consisting of pentacyclic triterpenes and physiologically acceptable salts and derivatives thereof. In other words, the present invention relates to a melanogenesis-inhibitory agent for use in animals and plants, which is characterized by the melanogenesis-inhibitory effect of, for instance, the pentacyclic triterpenes included therein, the agent can easily and continuously be used and accordingly, a favorable melanogenesis-inhibitory effect can be expected. In this respect, the term "pentacyclic triterpenes" herein used means pentacyclic compounds among the triterpenes consisting of 6 isoprene units and they are a group of compounds abundantly present in various kinds of plants in the natural world. These compounds as natural substances can be extracted from plant bodies, some of them can artificially be synthesized and have already been put on the market as, for instance reagents. Both of them can suitably be used in the present invention and, in particular, those extracted from natural resources can be applied to foods and beverages without anxiety.

The term "comprising as an effective component" herein used means that the agent comprises the foregoing compound in an amount sufficient for the agent to show the melanogenesis-inhibitory effect, but the content thereof in the melanogenesis-inhibitory agent for use in animals and plants according to the present invention can conveniently be adjusted on the basis of a variety of factors such as the kinds of pentacyclic triterpenes to be incorporated, the manner of the use thereof, the purposes of the use thereof, the amount thereof, the frequency of the use thereof and the extent of melanin-production in animals and plants and therefore, it cannot unconditionally be determined. In the present invention, the content thereof is, for instance, but is not limited to, not less than 0.00001% by mass, preferably 0.00001 to 99.99% by mass, more preferably 0.0001 to 99.99% by mass, further preferably 0.0005 to 99.99% by mass, still further preferably 0.001 to 99.99% by mass, still further preferably 0.005 to 99.99% by mass, still further preferably 0.01 to 99.99% by mass, still further preferably 0.05 to 99.99% by mass, still further preferably 0.1 to 99.99% by mass, still further preferably 0.5 to 99.99% by mass and still further preferably 1 to 99.99% by mass. If administering or applying, to an animal or plant body, for instance, the feed or fertilizer of the present invention over a long period of time, the feed or fertilizer preferably has a low content of, for instance, the pentacyclic triterpenes while taking into consideration the balance between the effect and the cost or the like. Consequently, the agent or the like of the present invention can preferably ensure the desired effect, even when it has a low content of, for instance, the pentacyclic triterpenes.

In the inhibitory agent of the present invention, when it comprises maslinic acid as an extract prepared from olive plants or the defatted products delivered from the olive oil-production process, the content of maslinic acid in the extract preferably ranges from 0.0001 to 30% by mass, more preferably 0.0005 to 30% by mass, further preferably 0.001 to 25% by mass, particularly preferably 0.005 to 25% by mass, more particularly preferably 0.01 to 20% by mass, still more particularly preferably 0.05 to 20% by mass and most preferably 0.1 to 15% by mass.

In the inhibitory agent of the present invention, when it comprises maslinic acid as a concentrate prepared from olive plants or the defatted products delivered from the olive oil-production process, the content of maslinic acid in the concentrate preferably ranges from 0.01 to 50% by mass, more preferably 0.05 to 45% by mass, further preferably 0.1 to 40% by mass, particularly preferably 0.5 to 35% by mass, more particularly preferably 1 to 30% by mass and most preferably 2 to 25% by mass.

In the inhibitory agent of the present invention, when it comprises maslinic acid as a crude purified product prepared from olive plants or the defatted products delivered from the olive oil-production process, the content of maslinic acid in the crude purified product preferably ranges from 1 to 99% by mass, more preferably 2 to 98% by mass, further preferably 5 to 95% by mass, particularly preferably 10 to 95% by mass, more particularly preferably 15 to 85% by mass and most preferably 20 to 80% by mass.

In the inhibitory agent of the present invention, when it comprises maslinic acid as a purified product prepared from olive plants or the defatted products delivered from the olive oil-production process, the content of maslinic acid in the purified product is preferably not less than 70% by mass, more preferably 75 to 99.99999% by mass, further preferably 80 to 99.9999% by mass, particularly preferably 85 to 99.999% by mass, more particularly preferably 90 to

99.99% by mass and most preferably 95 to 99.9% by mass.

Preferably used herein as effective components having melanogenesis- inhibitory effect are oleanane triterpenes, ursane triterpenes and lupane triterpenes among the foregoing pentacyclic triterpenes and the present invention relates to a melanogenesis-inhibitory agent for use in animals and plants, which comprises at least one member selected from the group consisting of these triterpenes. Moreover, the foregoing oleanane triterpenes are preferably maslinic acid and/or erythrodiol, in particular, maslinic acid. The ursane triterpenes preferably used herein are ursolic acid and/or uvaol. The lupane triterpenes preferably used herein are betulinic acid and/or betulin.

The melanogenesis-inhibitory effect of these compounds may be evaluated by a test method using cultured melanocytes (pigment cells). According to this evaluation method, it would be recognized that these effective components have a melanogenesis-inhibitory effect several ten times to several hundred times higher than that observed for vitamin C/magnesium phosphate whose melanogenesis-inhibitory effect has long been known. Moreover, the effects of the components observed when they are continuously used can be evaluated by, for instance, a test in which they are orally administered to laboratory animals and as a result, it has been confirmed that they satisfactorily show such melanogenesis-inhibitory effects.

Moreover, the present invention relates to a raw material for a melanogenesis-inhibitory agent for use in animals and plants, which comprises, as an effective component, at least one member selected from the group consisting of pentacyclic triterpenes and physiologically acceptable salts or derivatives thereof. In this respect, the foregoing pentacyclic triterpenes preferably used herein are oleanane triterpenes, ursane triterpenes and lupane triterpenes. Moreover, the foregoing oleanane triterpenes are preferably maslinic acid and/or erythrodiol, in particular, maslinic acid. The ursane triterpenes preferably used herein are ursolic acid and/or uvaol. The lupane triterpenes preferably used herein are betulinic acid and/or betulin. When using these compounds as raw materials, they are preferably used in a high concentration. The concentration thereof is not limited to any specific one, but it is preferably not less than 0.1% by mass, more preferably 0.1 to 99.99% by mass, further preferably 1 to 99.99% by mass, still further preferably 10 to 99.99% by mass, further preferably 30 to 99.99% by mass, further preferably 50 to 99.99% by mass, further preferably 70 to 99.99% by mass and further preferably 90 to 99.99% by mass.

In addition, the present invention relates to a method of using at least one member selected from the group consisting of pentacyclic triterpenes and physiologically acceptable salts or derivatives thereof, as a melanogenesis-inhibitory agent for use in animals and plants. In this respect, the foregoing pentacyclic triterpenes preferably used in this method are oleanane triterpenes, ursane triterpenes and lupane triterpenes. Moreover, the foregoing oleanane triterpenes are preferably maslinic acid and/or erythrodiol, in particular, maslinic acid. The ursane triterpenes preferably used herein are ursolic acid and/or uvaol. The lupane triterpenes preferably used herein are betulinic acid and/or betulin.

In particular, the melanogenesis-inhibitory agent for use in animals and plants according to the present invention can be used in the form of a variety of feeds for the purpose of accomplishing the melanogenesis-inhibitory effect thereof. In other words, the present invention relates to a feed, which comprises at least one member selected from the group consisting of pentacyclic triterpenes and physiologically acceptable salts or derivatives thereof as a melanogenesis-inhibitory component for use in animals and plants. In this connection, the foregoing pentacyclic triterpenes preferably used in this feed are oleanane triterpenes, ursane triterpenes and lupane triterpenes. Moreover, the foregoing oleanane triterpenes are preferably maslinic acid and/or erythrodiol, in particular, maslinic acid. The ursane triterpenes preferably used herein are ursolic acid and/or uvaol. The lupane triterpenes preferably used herein are betulinic acid and/or betulin. In particular, it is further preferred that the pentacyclic triterpene be maslinic acid or ursolic acid. The content of the melanogenesis- inhibitory agent for use in animals and plants in the feed of the present invention can conveniently be adjusted on the basis of a variety of factors such as the kinds of pentacyclic triterpenes to be incorporated, the manner of the use thereof, the purposes of the use thereof, the amount thereof to be used, the frequency of the use thereof, the species, sexes and body weights of specific subjects to which the feed is administered, and the extent of melanin-production in animals and plants and therefore, it cannot unconditionally be determined. In the present invention, the content thereof is, for instance, but is not limited to, in the range of from 0.00001 to 50% by mass, preferably 0.0001 to 30% by mass, more preferably 0.001 to 20% by mass, further preferably 0.01 to 10% by mass and particularly preferably 0.1 to 5% by mass on the basis of the body weight of each specific subject when at least one member selected from the group consisting of pentacyclic triterpenes and physiologically acceptable salts and derivatives thereof are used alone and directly administered or applied to the subject. On the other hand, when these compounds are indirectly administered or applied through, for instance, immersion, they are used in the form of a solution having a concentration ranging from 0.001 to 30% by mass, preferably 0.01 to 20% by mass and more preferably 0.1 to 10% by mass.

When the feed of the present invention comprises the effective components such as pentacyclic triterpenes in the form of a defatted product obtained in the olive oil-production process, the defatted product is preferably incorporated into the feed directly administered in an amount ranging from 0.01 to 40% by mass, further preferably 0.05 to 30% by mass, particularly preferably 0.1 to 20% by mass, further particularly preferably 0.3 to 10% by mass and most preferably 0.5 to 10% by mass. The use of the effective component in such an amount would permit the achievement

of the desired blackening/browning-inhibitory effect without significantly reducing the nutritive value of the resulting overall feed. In general, the feed comprises, for instance, defatted soybean products and/or defatted rapeseed products as nutrients. On the other hand, the defatted products derived from olive plants are abundant of fibrous materials, but have low nutritive values and therefore, they are not fit for use as feeds, but are used as fuel materials. However, the feed of the present invention can show the desired effect even when it comprises the effective components such as pentacyclic triterpenes in the form of defatted products derived from olive plants or when the feed has a very low content of the effective component. In other words, the feed of the present invention may comprise such defatted products derived from olive plants without impairing the health conditions of animals at all.

In particular, the melanogenesis-inhibitory agent for use in animals and plants according to the present invention may be used in the form of a variety of fertilizers for making the effective use of the melanogenesis-inhibitory effect thereof. In other words, the present invention relates to a fertilizer comprising at least one member selected from the group consisting of pentacyclic triterpenes and physiologically acceptable salts and derivatives thereof as a component for preventing any melanin-production in animals and plants. In this connection, the foregoing pentacyclic triterpenes preferably used in this fertilizer are oleanane triterpenes, ursane triterpenes and lupane triterpenes. Moreover, the foregoing oleanane triterpenes are preferably maslinic acid and/or erythrodiol, in particular, maslinic acid. The ursane triterpenes preferably used herein are ursolic acid and/or uvaol. The lupane triterpenes preferably used herein are betulinic acid and/or betulin. The content of the melanogenesis-inhibitory agent for use in animals and plants in the fertilizer of the present invention can conveniently be adjusted on the basis of a variety of factors such as the kinds of pentacyclic triterpenes to be incorporated, the manner of the use thereof, the purposes of the use thereof, the amount thereof to be used, the frequency of the use thereof, the species and body weights of specific subjects to which the fertilizer is applied, and the extent of melanin-production in animals and plants and therefore, it cannot unconditionally be determined. In the present invention, the content thereof is, for instance, but is not limited to, in the range of from 0.0001 to 30% by mass, preferably 0.001 to 20% by mass, more preferably 0.01 to 15% by mass, further preferably 0.1 to 10% by mass and particularly preferably 0.1 to 5% by mass on the basis of the weight of the soil used when at least one member selected from the group consisting of pentacyclic triterpenes and physiologically acceptable salts and derivatives thereof are used alone and the resulting fertilizer is applied to mixed soils and it is applied to the soil through watering or irrigation. On the other hand, when it is used in the form of a culture medium (solution), the solution contains the foregoing effective component in a concentration ranging from 0.001 to 20% by mass, preferably 0.01 to 10% by mass and more preferably 0.1 to 5% by mass on the basis of the mass of the solution.

Moreover, the present invention also relates to a blackening/browning-inhibitory composition comprising at least one member selected from the group consisting of pentacyclic triterpenes and physiologically acceptable salts and derivatives thereof and preferably relates to a blackening/browning-inhibitory composition comprising at least one member selected from the group consisting of pentacyclic triterpenes and physiologically acceptable salts and derivatives thereof as well as at least one member selected from the group consisting of antioxidants, organic acids and salts thereof and phosphoric acid and salts thereof. The resulting blackening/browning-inhibitory composition is quite suitable, since it shows a synergistic effect due to the simultaneous use of the pentacyclic triterpenes and physiologically acceptable salts and derivatives thereof having a melanogenesis-inhibitory effect and the foregoing at least one member selected from the group consisting of antioxidants, organic acids and salts thereof and phosphoric acid and salts thereof. In this connection, the content of the at least one effective component selected from the group consisting of pentacyclic triterpenes and physiologically acceptable salts and derivatives thereof in the blackening/browning-inhibitory composition of the present invention can conveniently be adjusted on the basis of a variety of factors such as the kinds of pentacyclic triterpenes to be incorporated, the manner of the use thereof, the purposes of the use thereof, the amount thereof to be used, the frequency of the use thereof, and the extent of melanin-production and therefore, it cannot unconditionally be determined. In the present invention, the content thereof is, for instance, but is not limited to, not less than 0.00001% by mass, preferably 0.00001 to 99.99% by mass, more preferably 0.0001 to 99.99% by mass, further preferably 0.0005 to 99.99% by mass, further preferably 0.001 to 99.99% by mass, further preferably 0.005 to 99.99% by mass, further preferably 0.01 to 99.99% by mass, further preferably 0.05 to 99.99% by mass, further preferably 0.1 to 99.99% by mass, further preferably 0.5 to 99.99% by mass and further preferably 1 to 99.99% by mass. Similarly, the content of the foregoing at least one member selected from the group consisting of antioxidants, organic acids and salts thereof and phosphoric acid and salts thereof in the blackening/browning-inhibitory composition of the present invention can conveniently be adjusted on the basis of a variety of factors such as the kinds of, for instance, the antioxidant to be incorporated, the manner of the use thereof, the purposes of the use thereof, the amount thereof to be used, the frequency of the use thereof, and the extent of melanin-production and therefore, it cannot unconditionally be determined. In the present invention, the content thereof is, for instance, but is not limited to, in the range of from 0.0001 to 95% by mass, preferably 0.001 to 90% by mass, more preferably 0.01 to 80% by mass, further preferably 0.05 to 70% by mass, further preferably 0.1 to 60% by mass, and further preferably 0.5 to 50% by mass. In addition, the ratio of the amount of the foregoing at least one member selected from the group consisting of antioxidants, organic acids and salts thereof and phosphoric acid and salts thereof to that of the at least one member selected from

the group consisting of pentacyclic triterpenes and physiologically acceptable salts and derivatives thereof can conveniently be adjusted on the basis of a variety of factors such as the kinds of, for instance, the antioxidant, organic acid and salts thereof and phosphoric acid and salts thereof to be incorporated, the desired degree of the synergistic effect, the manner of the use thereof, the purposes of the use thereof, the amount thereof to be used, the frequency of the use thereof, and the extent of melanin-production and therefore, it cannot unconditionally be determined. However, it is sufficient that the amount of the foregoing at least one member selected from the group consisting of antioxidants, organic acids and salts thereof and phosphoric acid and salts thereof is, for instance, but is not limited to, in the range of from 0.001 to 1000, preferably 0.005 to 500, more preferably 0.01 to 100, further preferably 0.05 to 50 and particularly preferably 0.1 to 20 as expressed in terms of the mass ratio while defining the mass of the at least one member selected from the group consisting of pentacyclic triterpenes and physiologically acceptable salts and derivatives thereof to be 1.

In this respect, the blackening/browning-inhibitory composition of the present invention may be used in the form of a variety of feeds in order to make the effective use of the blackening/browning-inhibitory effect. In other words, the present invention relates to a feed comprising the blackening/browning-inhibitory composition. The content of the blackening/browning-inhibitory composition in the feed of the present invention can conveniently be adjusted on the basis of a variety of factors such as the kinds of, for instance, pentacyclic triterpenes and antioxidants to be incorporated, the manner of the use thereof, the purposes of the use thereof, the amount thereof to be used, the frequency of the use thereof, the species, sexes and body weights of specific subjects to which the feed is administered, and the extent of melanin-production in the subjects and therefore, it cannot unconditionally be determined. In the present invention, it is sufficient that the content thereof is, for instance, but is not limited to, in the range of from 0.00001 to 50% by mass, preferably 0.0001 to 30% by mass, more preferably 0.001 to 20% by mass, further preferably 0.01 to 10% by mass and particularly preferably 0.1 to 5% by mass on the basis of the body weight of each specific subject, in case of the oral administration thereof, while it may be used in the form of, for instance, a solution having a concentration ranging from 0.001 to 30% by mass, preferably 0.01 to 20% by mass and more preferably 0.1 to 10% by mass in case of the indirect administration through, for instance, immersion.

Alternatively, the blackening/browning-inhibitory composition of the present invention may be used in the form of a variety of fertilizers in order to make the effective use of the blackening/browning-inhibitory effect. In other words, the present invention relates to a fertilizer comprising the blackening/browning-inhibitory composition. The content of the blackening/browning-inhibitory composition in the fertilizer of the present invention can conveniently be adjusted on the basis of a variety of factors such as the kinds of, for instance, pentacyclic triterpenes and antioxidants to be incorporated, the manner of the use thereof, the purposes of the use thereof, the amount thereof to be used, the frequency of the use thereof, the species and weights of specific subjects to which the fertilizer is applied, and the extent of melanin-production in the subjects and therefore, it cannot unconditionally be determined. In the present invention, it is sufficient that the content thereof is, for instance, but is not limited to, in the range of from 0.0001 to 30% by mass, preferably 0.001 to 20% by mass, more preferably 0.01 to 15% by mass, further preferably 0.1 to 10% by mass and particularly preferably 0.1 to 5% by mass on the basis of the weight of the soil used when the resulting fertilizer is applied to mixed soils and it is applied to the soil through watering or irrigation. On the other hand, when it is used in the form of a culture medium (solution), the solution satisfactorily contains the foregoing effective component in a concentration ranging from 0.001 to 20% by mass, preferably 0.01 to 10% by mass and more preferably 0.1 to 5% by mass on the basis of the mass of the solution.

The melanogenesis-inhibitory agent for use in animals and plants according to the present invention is used for inhibiting and/or preventing the production of melanin dyestuff in, for instance, animal and plant bodies and/or a part thereof and/or foods, which make use of a part of these animal and/or plant bodies as raw materials. It has in general been known that melanin is produced as a result of living activities of animals and plants, that it is tinted with a black to brown color and that it becomes a cause of the blackening and/or browning phenomena of perishable foods such as meat, fishes and vegetables. For this reason, the control of the melanin-production would permit the significant improvement in the commercial values of perishable foods such as meat, fishes and vegetables; pet animals; and animals and plants for admiration. As has been discussed above, the melanogenesis-inhibitory agent for use in animals and plants according to the present invention can significantly contribute to the improvement in the commercial values of perishable foods such as meat, fishes and vegetables; pet animals; and animals and plants for admiration.

The present invention relates to a feed, a fertilizer, a melanogenesis- inhibitory agent for animals and plants and a blackening and/or browning-inhibitory composition for animals and plants, which comprise, as an effective component, at least one member selected from the group consisting of pentacyclic triterpenes and physiologically acceptable salts or derivatives thereof. In general, the term "pentacyclic triterpene" herein used means a kind of triterpenes, or a pentacyclic compound consisting of 6 isoprene units, which in general comprises 30 carbon atoms, but the carbon atom number thereof may vary through, for instance, rearrangement, oxidation, elimination or alkylation during its biosynthesis process. The pentacyclic triterpenes used in the melanogenesis-inhibitory agent for animals and plants according to the present invention may include the foregoing pentacyclic triterpenes, and physiologically acceptable

salts and/or derivatives such as those in which hydroxyl groups and/or carboxyl groups thereof are substituted, the resources thereof are not restricted to particular ones and accordingly, the pentacyclic triterpenes usable herein include those derived from natural resources, those artificially synthesized and commercially available ones. However, it is preferred to use those derived from natural resources, while taking into consideration the fact that the present invention is applied to foods and beverages, with those extracted and/or isolated from naturally occurring substances being particularly preferred in the present invention.

The pentacyclic triterpenes are in general divided into subgroups on the basis of their skeletal structures. Examples of pentacyclic triterpenes usable in the present invention include oleanane triterpenes, ursane triterpenes, lupane triterpenes, hopane triterpenes, serratane triterpenes, friedelane triterpenes, taraxerane triterpenes, taraxastane triterpenes, multiflorane triterpenes and germanicane triterpenes.

The term "physiologically acceptable salts of pentacyclic triterpenes" herein used means, in particular, salts derived from carboxyl groups of pentacyclic triterpene acids (partial structure: -COOX, wherein X represents an arbitrary cationic substance) and includes those originally present in isolates from naturally occurring substances used in the present invention. In the present invention, such salts are not restricted to specific ones inasmuch as they are currently used in foods and beverages or pharmaceutical compositions and specific examples thereof are alkali metal salts such as sodium, potassium and lithium salts; alkaline earth metal salts such as calcium, magnesium, barium and zinc salts; ammonium salts; alkylamine salts such as methylamine, dimethylamine, trimethylamine, ethylamine, diethylamine, triethylamine, propylamine, butylamine, tetrabutylamine, pentylamine and hexylamine salts; alkanolamine salts such as ethanolamine, diethanolamine, triethanolamine, propanolamine, dipropanol- amine, isopropanolamine and di-isopropanolamine salts; other organic amine salts such as piperazine and piperidine salts; and basic amino acid salts such as lysine, alginine, histidine and tryptophane salts. Among them, preferably used herein are alkali metal salt, alkylamine salts, alkanolamine salts and basic amino acid salts. These salts unconditionally show good solubility in water as compared with the original pentacyclic triterpenes and therefore, these salts are preferably used in the present invention, in particular, when the present invention relates to an aqueous melanogenesis-inhibitory agent for animals and plants.

Moreover, the term "derivatives" herein used means those biochemically or artificially derivatized from the pentacyclic triterpenes and they are not restricted to specific ones insofar as they can biochemically or artificially prepared in the present invention. Examples thereof are derivatives carrying alcohol ester groups, those having fatty acid ester groups, those having alkoxy groups, those having alkoxymethyl groups, or glycosides. Among these derivatives, those having alcohol ester groups, those having fatty acid ester groups, those having alkoxy groups and those having alkoxymethyl groups show good oil-solubility higher than that observed for the original pentacyclic triterpenes and therefore, these derivatives are preferably used, in particular, in an oily melanogenesis- inhibitory agent for animals and plants according to the present invention. On the other hand, the glycosides thereof have good water-solubility higher than that observed for the original pentacyclic triterpenes and therefore, the glycosides are preferably used, in particular, in an aqueous melanogenesis- inhibitory agent for animals and plants according to the present invention.

A part of these derivatives are also present in nature and alternatively, they can likewise artificially be prepared. Moreover, the derivatives of the present invention may further be derivatized and salts thereof may be used in the present invention.

The term "alcohol ester group" herein used means a functional group formed as a result of the usual dehydration reaction between carboxyl group and an alcohol (partial structure: -COOR, wherein R represents an arbitrary hydrocarbon functional group). In other words, the derivatives of the pentacyclic triterpenes having alcohol ester groups used in the present invention are, in particular, those capable of being formed from the carboxyl groups of the triterpenes with alcohols. In this connection, the alcohols are not restricted to any specific one, but specific examples thereof include methanol, ethanol, n-propanol, isopropanol, allyl alcohol, n-butanol, sec-butanol, tert-butanol, ethylene glycol, trimethylsilyl alcohol, triethylsilyl alcohol, phenol, benzyl alcohol and glycosides. Among them, preferably used in the invention are derivatives derived from ethanol, triethylsilyl alcohol, methanol, n-propanol, isopropanol and trimethylsilyl alcohol.

The term "fatty acid ester group" herein used means a functional group formed as a result of the usual dehydration reaction between a hydroxyl group and a fatty acid (partial structure: -OCOR, wherein R represents an arbitrary hydrocarbon functional group). In other words, the derivatives of the pentacyclic triterpenes having fatty acid ester groups used in the present invention are, in particular, those capable of being formed from the hydroxyl groups of the triterpenes with fatty acids. In this respect, the fatty acids usable herein are not restricted to any specific one, but specific examples thereof include acetic acid, propionic acid, butyric acid, isobutyric acid, valeric acid, isovaleric acid, pivalic acid, caproic acid, caprylic acid, capric acid, undecanoic acid, lauric acid, myristic acid, palmitic acid, palmitoleic acid, stearic acid, oleic acid, elaidic acid, vaccenic acid, linoleic acid, linoelaidic acid, linolenic acid, γ-linolenic acid, arachidic acid, arachidonic acid, eicosapentaenoic acid, behenic acid, docosahexaenoic acid, lignoceric acid, cerotic acid, montanoic acid and melissic acid. Among these fatty acid derivatives, preferably used in the invention are those formed from acetic acid, acetic acid anhydride, caproic acid, caprylic acid, capric acid, lauric acid, myristic acid, palmitic

acid, palmitoleic acid, stearic acid, oleic acid, elaidic acid, linoleic acid, linoelaidic acid, linolenic acid, γ-linolenic acid, arachidic acid, arachidonic acid, eicosapentaenoic acid, behenic acid and docosahexaenoic acid.

The term "alkoxy group" herein used means the functional group formed as a result of the usual dehydration reaction between a hydroxyl group and an alcohol (partial structure: -OR, wherein R represents an arbitrary hydrocarbon functional group). In other words, the derivatives of the pentacyclic triterpenes having alkoxy groups used in the present invention are, in particular, those capable of being formed from the hydroxyl groups of the triterpenes with alcohols. In this connection, the alcohols are not restricted to any specific one, but specific examples thereof include methanol, ethanol, n-propanol, isopropanol, allyl alcohol, n-butanol, sec-butanol, tert-butanol, ethylene glycol, trimethylsilyl alcohol, triethylsilyl alcohol, phenol, benzyl alcohol and glycosides. Among them, preferably used in the invention are derivatives derived from ethanol, triethylsilyl alcohol, methanol, n-propanol, isopropanol and trimethylsilyl alcohol.

The term "alkoxymethyl group" herein used means the functional group formed as a result of the usual dehydration reaction between a hydroxylmethyl group and an alcohol (partial structure: $-CH_2OR$, wherein R represents an arbitrary hydrocarbon functional group). In other words, the derivatives of the pentacyclic triterpenes having alkoxymethyl groups used in the present invention are, in particular, those capable of being formed from the hydroxylmethyl groups of the triterpenes with alcohols. In this connection, the alcohols are not restricted to any specific one, but specific examples thereof include methanol, ethanol, n-propanol, isopropanol, allyl alcohol, n-butanol, sec-butanol, tert-butanol, ethylene glycol, trimethylsilyl alcohol, triethylsilyl alcohol, phenol, benzyl alcohol and glycosides. Among them, preferably used in the invention are derivatives derived from ethanol, triethylsilyl alcohol, methanol, n-propanol, isopropanol and trimethylsilyl alcohol.

Moreover, the term "glycoside" used herein means, in particular, a derivative formed from a carboxyl, hydroxyl or hydroxymethyl group of the pentacyclic triterpene with a saccharide (partial structure: -COOR, -OR and $-CH_2OR$, wherein R represents an arbitrary saccharide residue) among the foregoing derivatives of pentacyclic triterpenes having alcohol ester groups, alkoxy groups and alkoxymethyl groups. In this respect, the saccharide is not restricted to any specific one, but specific examples thereof are glucose, mannose, galactose, fructose, xylose, arabinose, fucose, rhamnose, glucosamine, galactosamine and glucuronic acid, which may be either α - or β -isomer. In addition, these glycosides may be either monosaccharide or oligosaccharides of disaccharides or higher ones consisting of at least two kinds of saccharides variously combined. Among them, some glycosides are usually present in nature and they are known generically as saponins. All of them can be used in the present invention.

The foregoing are the pentacyclic triterpenes usable in the present invention, but preferably used herein are, in particular, oleanane triterpenes, ursane triterpenes, lupane triterpenes and physiologically acceptable salts and derivatives thereof in the light of the strength of the melanogenesis-inhibitory effect. More specifically, preferably used herein are oleanane triterpenes, ursane triterpenes and lupane triterpenes, whose skeletons are represented by the following general formulas (I), (II) and (III), respectively as well as physiologically acceptable salts and derivatives thereof. Moreover, the functional groups in each formula are the same as those defined above.

(I)

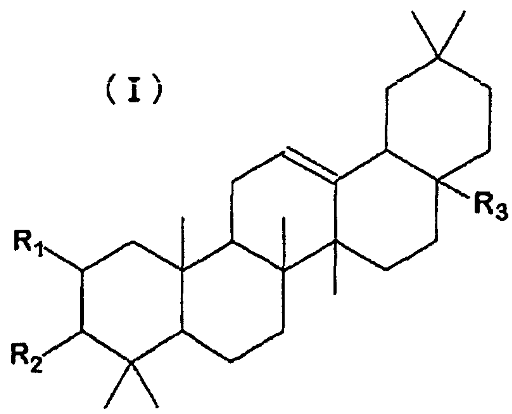

In the formula (I), $R_1$ and $R_2$ each represents a hydrogen atom (-H), a hydroxyl group (-OH), an alkoxy group (-OR) or an alcohol ester group (-OCOR); and $R_3$ represents a methyl group ($-CH_3$), a hydroxymethyl group ($-CH_2OH$), an alkoxymethyl group ($-CH_2OR$), a carboxyl group (-COOH), a fatty acid ester group (-COOR) or a carboxylic acid salt residue (-COOX).

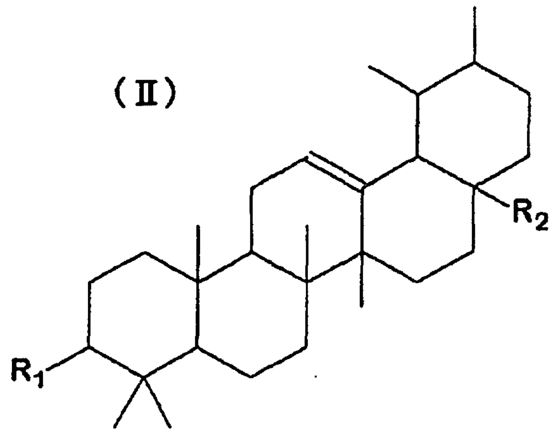

In the formula (II), $R_1$ represents a hydrogen atom (-H), a hydroxyl group (-OH), an alkoxy group (-OR) or an alcohol ester group (-OCOR) and $R_2$ represents a methyl group ($-CH_3$), a hydroxymethyl group ($-CH_2OH$), an alkoxymethyl group ($-CH_2OR$), a carboxyl group (-COOH), a fatty acid ester group (-COOR) or a carboxylic acid salt residue (-COOX).

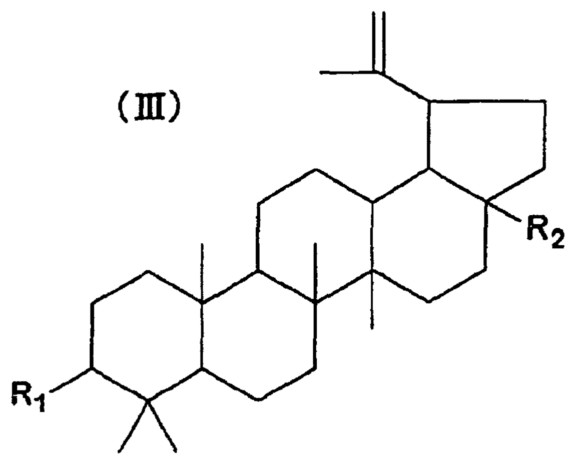

In the formula (III), $R_1$ represents a hydrogen atom (-H), a hydroxyl group (-OH), an alkoxy group (-OR) or an alcohol ester group (-OCOR) and $R_2$ represents a methyl group ($-CH_3$), a hydroxymethyl group ($-CH_2OH$), an alkoxymethyl group ($-CH_2OR$), a carboxyl group (-COOH), a fatty acid ester group (-COOR) or a carboxylic acid salt residue (-COOX).

In the present invention, the pentacyclic triterpenes usable herein are not restricted to specific ones, but specific examples thereof are oleanane triterpenes such as maslinic acid, oleanolic acid, erythrodiol, β-amyrin, hederagenin and glycyrrhetic acid; ursane triterpenes such as ursolic acid, uvaol, α-amyrin, quinovic acid, taraxasterol and α-hydroxy-ursolic acid; lupane triterpenes such as betulinic acid, betulin and lupeol. In addition, the physiologically acceptable salts and derivatives thereof are the same as those discussed above. When using such physiologically acceptable salts and derivatives of these pentacyclic triterpenes, oleanane triterpenes, ursane triterpenes, lupane triterpenes and physiologically acceptable salts and derivatives thereof are not limited in their sources or origin at all and may be those derived from naturally occurring substances, artificially synthesized ones and commercially available ones, with those derived from naturally occurring substances being preferably used, while taking into consideration the fact that they are applied to foods and beverages.

As has been described above, the pentacyclic triterpenes preferably used in the present invention are oleanane triterpenes of Formula (I), ursane triterpenes of Formula (II), lupane triterpenes of Formula (III) and physiologically acceptable salts or derivatives thereof. However, preferably used herein are oleanane triterpenes such as maslinic acid and erythrodiol; ursane triterpenes such as ursolic acid and uvaol; and lupane triterpenes such as betulinic acid and betulin, with physiologically acceptable salts or derivatives thereof being of course preferably used in the invention.

It has been known that both of maslinic acid and erythrodiol belong to the oleanane triterpene and that they are present in a variety of animals and plants. In addition, physiologically acceptable salts or derivatives thereof are the same as those defined above. When using maslinic acid and erythrodiol as well as physiologically acceptable salts

or derivatives thereof, in the melanogenesis-inhibitory agent for animals and plants according to the present invention, these substances are not limited in their origin at all and they may be those derived from naturally occurring substances, artificially synthesized ones and commercially available ones, with those derived from naturally occurring substances being preferably used, while taking into consideration the fact that they are applied to foods and beverages.

In the present invention, most preferably used pentacyclic triterpenes are maslinic acid and/or physiologically acceptable salts thereof while taking into consideration the strength of the melanogenesis-inhibitory effect and stable supply of the same. It has been known that maslinic acid is a kind of oleanane triterpenes, that it has a structure represented by the chemical formula (I) and that it shows an anti-inflammatory effect and an antihistaminic effect. It has also been known that maslinic acid is included in naturally occurring substances such as olive, hop, Japanese mint, pomegranate, clove, sage and jujube. Maslinic acid and physiologically acceptable salts and derivatives thereof used in the melanogenesis-inhibitory agent for animals and plants according to in the present invention are not restricted in their origins and they may be those derived from naturally occurring substances, artificially synthesized ones and commercially available ones. In this respect, those derived from naturally occurring substances such as olive, hop, Japanese mint, pomegranate, clove, sage and jujube are preferably used, while taking into consideration the fact that they are applied to foods and beverages, with maslinic acid and physiologically acceptable salts thereof derived from, in particular, olive being considerably preferred because of the abundance of the raw materials and the content of these substances. Maslinic acid and physiologically acceptable salts thereof can be isolated from these raw materials, in particular, olive plants by extracting them from the raw material with water and/or an organic solvent and the resulting extract can further be concentrated and/or purified to thus easily give naturally occurring maslinic acid and physiologically acceptable salts thereof in a high concentration and in a large quantity.

(IV)

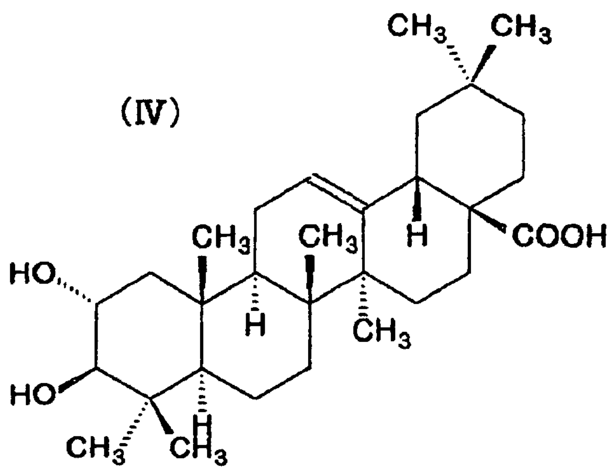

In the present invention, the physiologically acceptable salts and derivatives of maslinic acid are the same as those discussed above. More specifically, the physiologically acceptable salts are those derived from the group: -COOH in the following chemical formula (IV) and the kinds of salts are not restricted to specific ones insofar as they are currently used in foods and beverages as well as pharmaceutical compositions. Specific examples of such maslinic acid salts include sodium maslinate, potassium maslinate, ammonium maslinate, dimethylammonium maslinate, calcium maslinate and magnesium maslinate, with sodium maslinate and potassium maslinate being particularly preferred in the present invention.

In addition, derivatives of maslinic acid may be, for instance, those derivatized at any one position on the maslinic acid, such as maslinic acid methyl ester, maslinic acid ethyl ester, maslinic acid n-propyl ester, maslinic acid isopropyl ester, maslinic acid n-butyl ester, maslinic acid trimethylsilyl ester, maslinic acid triethylsilyl ester, maslinic acid β -D-glucopyranosyl ester, maslinic acid β -D-galactopyranosyl ester, 3-O-acetyl maslinate, 3-O-propionyl maslinate, 3-O-butyryl maslinate, 3-O-valeryl maslinate, 3-O-capryl maslinate, 3-O-lauryl maslinate, 3-O-myristyl maslinate, 3-O-palmityl maslinate, 3-O-palmitoleyl maslinate, 3-O-stearyl maslinate, 3-O-oleyl maslinate, 3-O-vaccenyl maslinate, 3-O-linoleyl maslinate, 3-O-linolenyl maslinate, 3-O-arachidyl maslinate, 3-O-arachidonyl maslinate, 3-0-behenyl maslinate, 2-O-acetyl maslinate, 2-0-propionyl maslinate, 2-O-butyryl maslinate, 2-O-valeryl maslinate, 2-O-capryl maslinate, 2-O-lauryl maslinate, 2-O-myristyl maslinate, 2-O-palmityl maslinate, 2-O-palmitoleyl maslinate, 2-O-stearyl maslinate, 2-O-oleyl maslinate, 2-O-vaccenyl maslinate, 2-O-linoleyl maslinate, 2-O-linolenyl maslinate, 2-O-arachidyl maslinate, 2-O-arachidonyl maslinate, 2-O-behenyl maslinate, 3-O-methyl maslinate, 3-O-ethyl maslinate, 3-O-t-butyl maslinate, 3-O-triethylsilyl maslinate, 3-O- β -D-glucopyranosyl maslinate, 3-O- β-D-galactopyranosyl maslinate, 3-O-

β -D-glucuronopyranosyl maslinate, 2-O-methyl maslinate, 2-O-ethyl maslinate, 2-O-t-butyl maslinate, 2-O-triethylsilyl maslinate, 2-O- β -D-glucopyranosyl maslinate, 2-O- β -D-galactopyranosyl maslinate and 3-O- β -D-glucuronopyranosyl maslinate. Among these maslinic acid derivatives, preferably used in the invention are maslinic acid ethyl ester, maslinic acid triethylsilyl ester, 3-O-acetyl maslinate, 2-O-acetyl maslinate, 2-O-triethylsilyl maslinate, 3-O-stearoyl maslinate and 2-O-stearoyl maslinate. The foregoing are examples of derivatives, which are derivatized only on one functional group of maslinic acid, but it is a matter of course that the derivatives usable in the present invention may be those derivatized on at least two positions or functional groups thereof. For instance, such derivatives may be 2,3-O-diacetyl derivatives, 2,3-O-di-triethylsilyl derivatives and 2,3-di-stearoyl derivatives of maslinic acid or the foregoing preferred maslinic acid ester and specific examples thereof preferably used herein are 2,3-O-diacetyl maslinate, 2,3-O-triethylsilyl-maslinic acid triethylsilyl ester and 2,3-di-stearoyl maslinate. In addition, only glycosides of monosaccharides are listed above, but the glycosides may naturally be oligo-saccharides comprising disaccharides or higher ones selected from a variety of saccharides.

Erythrodiol is a kind of oleanane triterpenes, has a structure represented by the following chemical formula (V) and it has presently been known that it shows, for instance, an anti-inflammatory effect (Planta. Med., 1995, Vol. 61, No. 2, pp. 182-185). It has been known that erythrodiol occurs in nature and is present in, for instance, olive, sunflower, common marigold, Arabic gum tree, red sanders and long leaf Litsea lancifolia. Erythrodiol and derivatives thereof used in the melanogenesis- inhibitory agent for animals and plants according to in the present invention are not restricted in their origins and they may be those derived from naturally occurring substances, artificially synthesized ones and commercially available ones. In this respect, those derived from naturally occurring substances such as olive, sunflower, common marigold, Arabic gum tree, red sanders and long leaf Litsea lancifolia are preferably used, while taking into consideration the fact that they are applied to foods and beverages, with erythrodiol and derivatives thereof derived from, in particular, olive and more specifically olive plants and/or by-products obtained in the olive oil-production processes being considerably preferred in the invention.

(V)

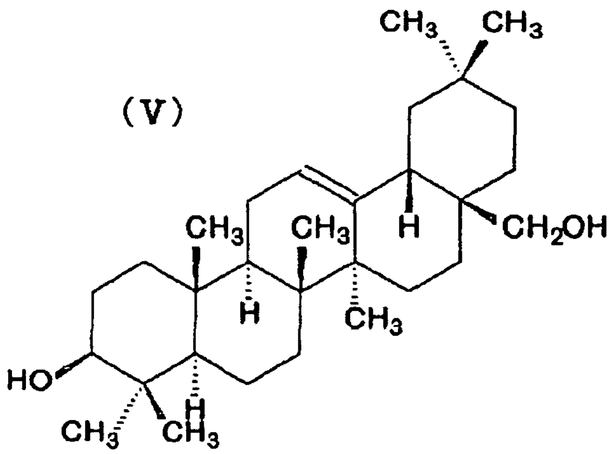

The physiologically acceptable salts and derivatives of erythrodiol are the same as those discussed above.

In this respect, the derivatives of erythrodiol are not limited to specific ones, but specific examples thereof are those derivatized at any one position on the erythrodiol, such as 3-O-acetyl erythrodiol, 3-O-propionyl erythrodiol, 3-O-butyryl erythrodiol, 3-O-valeryl erythrodiol, 3-O-capryl erythrodiol, 3-O-lauryl erythrodiol, 3-O-myristyl erythrodiol, 3-O-palmityl erythrodiol, 3-O-palmitoleyl erythrodiol, 3-O-stearyl erythrodiol, 3-0-stearoyl erythrodiol, 3-O-oleyl erythrodiol, 3-O-vaccenyl erythrodiol, 3-O-linoleyl erythrodiol, 3-O-linolenyl erythrodiol, 3-O-arachidyl erythrodiol, 3-O-arachidonyl erythrodiol, 3-O-behenyl erythrodiol, 28-0-acetyl erythrodiol, 28-O-propionyl erythrodiol, 28-O-butyryl erythrodiol, 28-0-valeryl erythrodiol, 28-O-capryl erythrodiol, 28-0-lauryl erythrodiol, 28-O-myristyl erythrodiol, 28-O-palmityl erythrodiol, 28-O-palmitoleyl erythrodiol, 28-O-stearyl erythrodiol, 28-O-oleyl erythrodiol, 28-O-vaccenyl erythrodiol, 28-O-linoleyl erythrodiol, 28-O-linolenyl erythrodiol, 28-O-arachidyl erythrodiol, 28-O-arachidonyl erythrodiol, 28-O-behenyl erythrodiol, 3-O-methyl erythrodiol, 3-O-ethyl erythrodiol, 3-O-t-butyl erythrodiol, 3-O-triethylsilyl erythrodiol, 28-O-methyl erythrodiol, 28-O-ethyl erythrodiol, 28-O-t-butyl erythrodiol, 28-O-triethylsilyl erythrodiol, 3-O- β -D-glucopyranosyl erythrodiol, 3-O- β -D-galactopyranosyl erythrodiol, 3-O- β -D-glucurono- pyranosyl erythrodiol, 28-O- β -D-glucopyranosyl erythrodiol, 28-O- β -D-galacto- pyranosyl erythrodiol and 28-O- β -D-glucurono-pyranosyl erythrodiol. Among these, preferably used in the invention are 3-O-acetyl erythrodiol and 28-O-acetyl erythrodiol. The foregoing are examples of derivatives, which are derivatized only on one functional group of erythrodiol, but it is a matter

of course that the derivatives usable in the present invention may be those derivatized on at least two positions or functional groups thereof. For instance, such derivatives may be 3,28-O-diacetyl erythrodiol. In addition, only glycosides of monosaccharides are listed above, but the glycosides may naturally be oligo-saccharides comprising saccharides selected from a variety of disaccharides or higher saccharides.

Both of ursolic acid and uvaol belong to the ursane triterpene and it has been known that they are substances present in a variety of animals and plants. In addition, the physiologically acceptable salts and derivatives thereof are the same as those described above. When using uvaol, ursolic acid, physiologically acceptable salts or derivatives thereof in the melanogenesis-inhibitory agent for animals and plants according to the present invention, they are not limited in their origin at all and they may be those derived from natural substances, artificially synthesized ones and commercially available ones, but preferably used herein are naturally occurring ones, while taking into consideration the fact that these substances are applied to foods and beverages.

Ursolic acid is a compound belonging to the ursane triterpene having a structure represented by the following chemical formula (VI) and it has presently been recognized that it shows a variety of effects such as an anti-inflammatory effect, an obesity- inhibitory effect, an anti-diabetic effect and an anti-lipemic effect (Jie Liu, Journal of Ethnopharmacology, 1995, 49: 57-68). It has been known that they are naturally and widely distributed in, for instance, leaves and fruits of apple, cherry and bearberry. In the melanogenesis-inhibitory agent for animals and plants according to the present invention, ursolic acid, physiologically acceptable salts or derivatives thereof are not limited in their origin at all and they may be those derived from natural substances, artificially synthesized ones and commercially available ones, but preferably used herein are those derived from natural substances such as apple, cherry and bearberry, while taking into consideration the fact that these substances are applied to foods and beverages.

(VI)

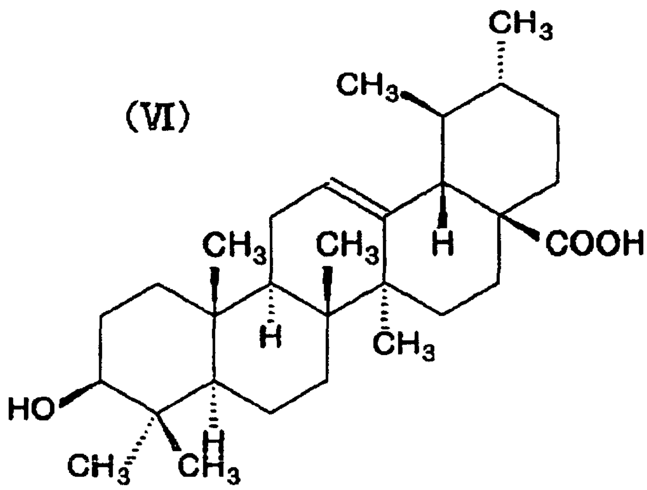

Regarding the ursolic acid, the physiologically acceptable salts and derivatives are the same as those described above.

Examples of physiologically acceptable salts of ursolic acid include, but are not limited to, sodium ursolate, potassium ursolate, ammonium ursolate, dimethyl- ammonium ursolate, calcium ursolate and magnesium ursolate.

In addition, derivatives of ursolic acid may be, for instance, those derivatized at any one position on the ursolic acid, such as ursolic acid methyl ester, ursolic acid ethyl ester, ursolic acid n-propyl ester, ursolic acid isopropyl ester, ursolic acid n-butyl ester, ursolic acid trimethylsilyl ester, ursolic acid triethylsilyl ester, ursolic acid β -D- glucopyranosyl ester, ursolic acid β -D-galactopyranosyl ester, 3-O-acetyl ursolate, 3-O-propionyl ursolate, 3-O-butyryl ursolate, 3-O-valeryl ursolate, 3-O-capryl ursolate, 3-O-lauryl ursolate, 3-O-myristyl ursolate, 3-O-palmityl ursolate, 3-O-palmitoleyl ursolate, 3-O-stearyl ursolate, 3-O-oleyl ursolate, 3-O-vaccenyl ursolate, 3-O-linoleyl ursolate, 3-O-linolenyl ursolate, 3-O-arachidyl ursolate, 3-O-arachidonyl ursolate, 3-O-behenyl ursolate, 3-O-methyl ursolate, 3-O-ethyl ursolate, 3-O-t-butyl ursolate, 3-O-triethylsilyl ursolate, 3-O- β -D-glucopyranosyl ursolate, 3-O- β -D-galactopyranosyl ursolate and 3-O- β -D-glucuronopyranosyl ursolate, with ursolic acid ethyl ester being preferably used in the invention among others. The foregoing are examples of derivatives, which are derivatized only on one functional group of ursolic acid, but it is a matter of course that the derivatives usable in the present invention may be those derivatized on at least two positions or functional groups thereof. In addition, only glycosides of monosaccharides are listed above, but the glycosides may naturally be oligo-saccharides comprising saccharides selected from a variety of disaccharides or higher saccharides.

Uvaol is a compound belonging to the ursane triterpene having a structure represented by the following chemical formula (VII) and it has presently been recognized that it shows a variety of effects such as an anti-inflammatory effect (Planta. Med., 1995, Vol. 61, No. 2, pp. 182-185) and a glycerophosphate dehydrogenase- inhibitory effect (Japanese Un-Examined Patent Publication Hei 9-67249). It has been known that they are present in nature and distributed in, for instance, olive, bearberry, sage, Arabic gum tree and cajeput tree. In the melanogenesis-inhibitory agent for animals and plants according to the present invention, uvaol or derivatives thereof are not limited in their origin at all and they may be those derived from natural substances, artificially synthesized ones and commercially available ones, but preferably used herein are those derived from natural substances such as olive, bearberry, sage, Arabic gum tree and cajeput tree, while taking into consideration the fact that these substances are applied to foods and beverages, with uvaol and derivatives thereof derived from, in particular, olive and more specifically olive plants and/or by-products obtained in the olive oil-production processes being considerably preferred in the invention.

(VII)

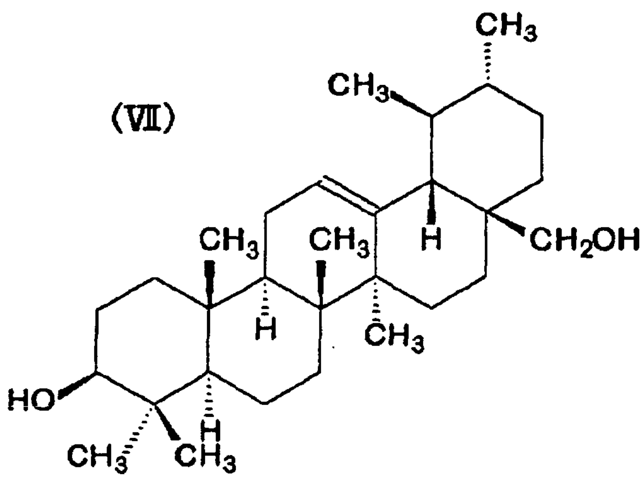

In respect of uvaol, the physiologically acceptable salts and derivatives thereof are the same as those discussed above.

In this respect, the derivatives of uvaol are not limited to specific ones, but specific examples thereof are those derivatized at any one position on the uvaol, such as 3-O-acetyl uvaol, 3-O-propionyl uvaol, 3-O-butyryl uvaol, 3-O-valeryl uvaol, 3-O-capryl uvaol, 3-O-lauryl uvaol, 3-O-myristyl uvaol, 3-O-palmityl uvaol, 3-O-palmitoleyl uvaol, 3-O-stearyl uvaol, 3-O-oleyl uvaol, 3-O-vaccenyl uvaol, 3-O-linoleyl uvaol, 3-O-linolenyl uvaol, 3-O-arachidyl uvaol, 3-O-arachidonyl uvaol, 3-O-behenyl uvaol, 28-O-acetyl uvaol, 28-O-propionyl uvaol, 28-O-butyryl uvaol, 28-O-valeryl uvaol, 28-O-capryl uvaol, 28-O-lauryl uvaol, 28-O-myristyl uvaol, 28-O-palmityl uvaol, 28-O-palmitoleyl uvaol, 28-O-stearyl uvaol, 28-O-oleyl uvaol, 28-O-vaccenyl uvaol, 28-O-linoleyl uvaol, 28-O-linolenyl uvaol, 28-O-arachidyl uvaol, 28-O-arachidonyl uvaol, 28-O-behenyl uvaol, 3-O-methyl uvaol, 3-O-ethyl uvaol, 3-O-t-butyl uvaol, 3-O-triethylsilyl uvaol, 28-O-methyl uvaol, 28-O-ethyl uvaol, 28-O-t-butyl uvaol, 28-O-triethylsilyl uvaol, 3-O- β -D-glucopyranosyl uvaol, 3-O-β -D-galactopyranosyl uvaol, 3-O- β -D-glucurono- pyranosyl uvaol, 28-O-β -D-glucopyranosyl uvaol, 28-O- β -D-galactopyranosyl uvaol and 28-O- β -D-glucuronopyranosyl uvaol, with 3-O-acetyl uvaol and 28-O-acetyl uvaol being preferred. The foregoing are examples of derivatives, which are derivatized only on one functional group of uvaol, but it is a matter of course that the derivatives usable in the present invention may be those derivatized on at least two positions or functional groups thereof. For instance, such derivatives may be 3,28-O-diacetyl uvaol. In addition, only glycosides of monosaccharides are listed above, but the glycosides may naturally be oligo-saccharides comprising saccharides selected from a variety of disaccharides or higher saccharides.

Both of betulinic acid and betulin belong to the lupane triterpene and it has been recognized that they are substances present in a variety of animals and plants. In addition, the physiologically acceptable salts and derivatives thereof are the same as those described above. When using betulinic acid and betulin, physiologically acceptable salts or derivatives thereof in the melanogenesis-inhibitory agent for animals and plants according to the present invention, they are not limited in their origin at all and they may be those derived from natural substances, artificially synthesized ones and commercially available ones, but preferably used herein are naturally occurring ones, while taking into consideration the fact that these substances are applied to foods and beverages.

Betulinic acid is a compound belonging to the lupane triterpene having a structure represented by the following chemical formula (VIII) and it has presently been recognized that it shows a variety of effects such as an anti-carcinogenic effect, an anti-inflammatory effect, a wound healing-promoting effect (Japanese Examined Patent Publication

Hei 4-26623), an alcohol absorption-inhibitory effect (Japanese Un-Examined Patent Publication Hei 7-53385) and a hair restoration-promoting effect (Japanese Un-Examined Patent Publication Hei 9-157139). It has been known that they are present in nature and distributed in, for instance, Japanese green gentian, clove, rinds of grapes and olive in their free states; and in, for instance, Panax schinseng Nees var. japonicum Makino, carrot and sugar beet in the form of saponins. In the melanogenesis-inhibitory agent for animals and plants according to the present invention, betulinic acid, physiologically acceptable salts or derivatives thereof are not limited in their origin at all and they may be those derived from natural substances, artificially synthesized ones and commercially available ones, but preferably used herein are those derived from natural substances such as Japanese green gentian, clove, rinds of grapes, olive, Panax schinseng Nees var. japonicum Makino, carrot and sugar beet, while taking into consideration the fact that these substances are applied to foods and beverages, with those derived from, in particular, olive and more specifically olive plants and/or by-products obtained in the olive oil-production processes being considerably preferred in the invention.

(VIII)

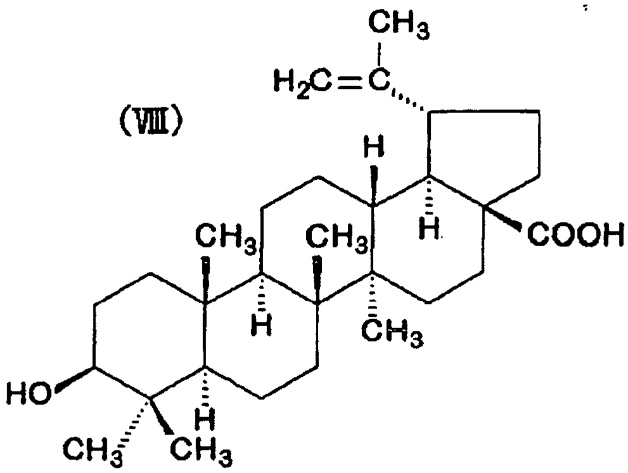

Regarding the betulinic acid, the physiologically acceptable salts and derivatives are the same as those described above.

Examples of physiologically acceptable salts of betulinic acid include, but are not limited to, sodium betulinate, potassium betulinate, ammonium betulinate, dimethyl- ammonium betulinate, calcium betulinate and magnesium betulinate, with sodium betulinate and potassium betulinate being preferably used herein.

In addition, derivatives of betulinic acid may be, for instance, those derivatized at any one position on the betulinic acid, such as betulinic acid methyl ester, betulinic acid ethyl ester, betulinic acid n-propyl ester, betulinic acid isopropyl ester, betulinic acid n-butyl ester, betulinic acid trimethylsilyl ester, betulinic acid triethylsilyl ester, betulinic acid β-D-glucopyranosyl ester, betulinic acid β-D-galactopyranosyl ester, 3-O-acetyl betulinate, 3-O-propionyl betulinate, 3-O-butyryl betulinate, 3-O-valeryl betulinate, 3-O-capryl betulinate, 3-O-lauryl betulinate, 3-O-myristyl betulinate, 3-O-palmityl betulinate, 3-O-palmitoleyl betulinate, 3-O-stearyl betulinate, 3-O-oleyl betulinate, 3-O-vaccenyl betulinate, 3-O-linoleyl betulinate, 3-O-linolenyl betulinate, 3-O-arachidyl betulinate, 3-O-arachidonyl betulinate, 3-O-behenyl betulinate, 3-O-methyl betulinate, 3-O-ethyl betulinate, 3-O-t-butyl betulinate, 3-O-triethylsilyl betulinate, 3-O- β -D-glucopyranosyl betulinate, 3-O- β-D-galactopyranosyl betulinate and 3-O- β -D-glucuronopyranosyl betulinate, with betulinic acid ethyl ester being preferably used in the invention among others. The foregoing are examples of derivatives, which are derivatized only on one functional group of betulinic acid, but it is a matter of course that the derivatives usable in the present invention may be those derivatized on at least two positions or functional groups thereof. In addition, only glycosides of monosaccharides are listed above, but the glycosides may naturally be oligo-saccharides comprising saccharides selected from a variety of disaccharides or higher saccharides.

Betulin is a kind of the lupane triterpene, has a structure represented by the following chemical formula (IX) and it has presently been recognized that it shows a variety of effects such as a biological protein-modification-inhibitory effect (Japanese Un-Examined Patent Publication Hei 9-67253), a glycerophosphoric acid dehydrogenase-inhibitory effect (Japanese Un-Examined Patent Publication Hei 9-67249), a lipase-inhibitory effect (Japanese Un-Examined Patent Publication Hei 10- 265328) and a hepatitis-prophylactic effect (Japanese Un-Examined Patent Publication Hei 11-209275). It has been known that this substance is naturally present in, for instance, the bark of white birch. In the melanogenesis-inhibitory agent for animals and plants according to the present invention, betulin or derivatives thereof are not limited in their origin at all and they may be those derived from natural substances, artificially synthesized ones and commercially available ones, but preferably used herein are those derived from natural substances such as the

bark of white birch, while taking into consideration the fact that these substances are applied to foods and beverages, with betulin and derivatives thereof derived from natural substances such as the bark of white birch being preferred in the invention.

(IX)

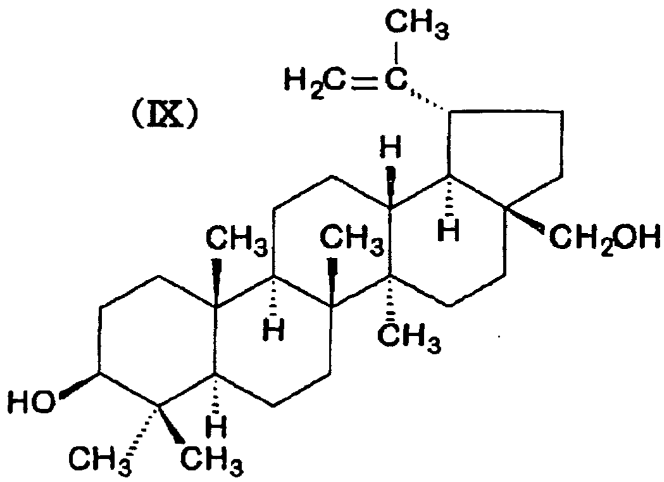

In respect of betulin, the physiologically acceptable salts and derivatives thereof are the same as those discussed above.

In this respect, the derivatives of betulin are not limited to specific ones, but specific examples thereof are those derivatized at any one position on the betulin, such as 3-O-acetyl betulin, 3-O-propionyl betulin, 3-O-butyryl betulin, 3-O-valeryl betulin, 3-O-capryl betulin, 3-O-lauryl betulin, 3-O-myristyl betulin, 3-O-palmityl betulin, 3-O-palmitoleyl betulin, 3-O-stearyl betulin, 3-O-oleyl betulin, 3-O-vaccenyl betulin, 3-O-linoleyl betulin, 3-O-linolenyl betulin, 3-O-arachidyl betulin, 3-O-arachidonyl betulin, 3-O-behenyl betulin, 28-O-acetyl betulin, 28-O-propionyl betulin, 28-O-butyryl betulin, 28-O-valeryl betulin, 28-O-capryl betulin, 28-O-lauryl betulin, 28-O-myristyl betulin, 28-O-palmityl betulin, 28-O-palmitoleyl betulin, 28-O-stearyl betulin, 28-O-oleyl betulin, 28-O-vaccenyl betulin, 28-O-linoleyl betulin, 28-O-linolenyl betulin, 28-O-arachidyl betulin, 28-O-arachidonyl betulin, 28-O-behenyl betulin, 3-O-methyl betulin, 3-O-ethyl betulin, 3-O-t-butyl betulin, 3-O-triethylsilyl betulin, 28-O-methyl betulin, 28-O-ethyl betulin, 28-O-t-butyl betulin, 28-O-triethylsilyl betulin, 3-O- β -D-glucopyranosyl betulin, 3-O- β -D-galactopyranosyl betulin, 3-O- β -D-glucuronopyranosyl betulin, 28-O- β -D-glucopyranosyl betulin, 28-O- β -D-galactopyranosyl betulin and 28-O- β -D-glucuronopyranosyl betulin, with 3-O-acetyl betulin and 28-O-acetyl betulin being preferred. The foregoing are examples of derivatives, which are derivatized only on one functional group of betulin, but it is a matter of course that the derivatives usable in the present invention may be those derivatized on at least two positions or functional groups thereof. For instance, such derivatives may be 3,28-O-diacetyl betulin. In addition, only glycosides of monosaccharides are listed above, but the glycosides may naturally be oligo-saccharides comprising saccharides selected from a variety of disaccharides or higher saccharides.

Among the foregoing pentacyclic triterpenes, those naturally occurring ones can be extracted from the corresponding plant bodies listed above and the defatted products of olive plants. In other words, they can be extracted from the corresponding plant bodies with water and/or an organic solvent and the extract thus obtained can further be purified and isolated by a variety of methods such as a solvent-extraction method, a method, which makes use of the difference in solubility between the triterpenes and impurities, a fractional precipitation method, a recrystallization method, an ion-exchange resin method and a liquid chromatography technique, which may be used alone or in any combination or repeatedly.

In particular, maslinic acid and/or physiologically acceptable salts thereof can be extracted from olive plant and the defatted products of olive plants with water and/or an organic solvent and the resulting extract can further be purified and isolated by a variety of methods such as a solvent-extraction method, a method, which makes use of the difference in solubility between the triterpenes and impurities, a fractional precipitation method, a recrystallization method, an ion-exchange resin method and a liquid chromatography technique, which may be used alone or in any combination or repeatedly.

The olive plant (Olea europaea L.) usable in the present invention may be any one irrespective of the habitats and may thus be those home-grown or Europe growth or may be edible ones or those for use in the oil expression. Maslinic acid and/or physiologically acceptable salts thereof capable of being incorporated into the melanogenesis-inhibitory agent for animals and plants according to the present invention can principally be derived from fruits and

seeds of olive plants as a natural plant and may further be obtained from the shells of the seeds, leaves, stems (or stalks) and buds or sprouts of olive plants. Moreover, they can be isolated from dried products, pulverized products and/or defatted products thereof. Among these, preferably used in the invention are dried products and pulverized products of defatted fruits (including the barks thereof) and barks. Moreover, it is likewise possible to obtain these substances from by-products obtained during the olive oil-manufacturing processes such as residues obtained after pressing, residues remaining after extraction, residues remaining after oil expression, pressed oils, extracted oils, oil sludge obtained after de-gumming, oil sludge obtained after removal of acids, dark oils, waste bleaching agents, scum obtained after deodorization, juice obtained after oil expression, waste water and waste filtering materials. Among these raw materials, preferably used in the invention are, for instance, residues remaining after oil expression and residues remaining after extraction.

The foregoing olive plants comprise maslinic acid and/or physiologically acceptable salts thereof and therefore, they can likewise be used in the melanogenesis-inhibitory agent for animals and plants, raw materials therefor, feeds, fertilizers and blackening/browning-inhibitory or prophylactic composition according to the present invention. In other words, the present invention relates to a melanogenesis-inhibitory agent for animals and plants, which comprises such an olive plant, a raw material for use in the preparation of a melanogenesis-inhibitory agent for animals and plants, which comprises such an olive plant, a feed comprising such an olive plant, a fertilizer comprising such an olive plant and a blackening/browning- inhibitory composition comprising such an olive plant.

In addition, it is preferred to humidify the foregoing fruits of olive plants and the defatted products thereof by the addition of water or by steaming the same, since the fruits of olive plants and the defatted products thereof moderately get swollen and this may improve the extraction efficiency. In this respect, the term "olive extract" used herein means an extract obtained by extracting the defatted products generated in the olive oil-production processes with a solvent and the term "defatted products generated in the olive oil-production processes" includes residues remaining after extraction and residues obtained after pressing (compression residues). Furthermore, the term "olive-extraction oil" herein used means an extracted oil obtained by further extracting the compression residues obtained in the olive oil-production processes with a solvent such as hexane.

In particular, the defatted product of the olive plant includes maslinic acid and/or physiologically acceptable salts thereof in high concentrations and the resulting maslinic acid and/or physiologically acceptable salts thereof are preferably used herein since it is not necessary to remove the oil fraction from the same.

The defatted product may be obtained using, as raw material, residues remaining after olive oil expression or residue obtained after the extraction of olive plant with, for instance, hexane.

Alternatively, it is also possible to suitably use a defatted product obtained by removing the lipid components included in the olive plant or the defatted product thereof through extraction with at least one member selected from the group consisting of hydrocarbons such as pentane, hexane and heptane, lower alkyl fatty acid esters such as ethyl acetate and known water-insoluble organic solvents such as diethyl ether and further, if necessary, repeating the foregoing extraction (or washing) operation.

The extraction of the olive plants with water and/or an organic solvent would permit the preparation of the maslinic acid and/or physiologically acceptable salts thereof incorporated into the melanogenesis-inhibitory agent for animals and plants according to the present invention. Moreover, the extract from the olive plants may be used in the melanogenesis-inhibitory agent for animals and plants and the raw material therefor, the feed, the fertilizer and/or the blackening/browning-inhibitory composition according to the present invention. In other words, the present invention relates to a melanogenesis-inhibitory agent for animals and plants, which comprises an extract from olive plants; to a raw material for a melanogenesis- inhibitory agent administered or applied to animals and plants, which comprises an extract from olive plants; to a feed comprising an extract from olive plants; to a fertilizer comprising an extract from olive plants; and to a blackening/browning-inhibitory composition comprising an extract from olive plants.

The organic solvent usable in the preparation of the maslinic acid and/or physiologically acceptable salts thereof from olive plants may be either a hydrophilic organic solvent or a hydrophobic organic solvent. Specific examples of hydrophilic organic solvents are alcohols such as methyl alcohol, ethyl alcohol, glycerin, propylene glycol and 1,3-butylene glycol and known organic solvents such as acetone, tetrahydrofuran, acetonitrile, 1,4-dioxane, pyridine, dimethylsulfoxide, N,N-dimethyl- formamide and acetic acid. In addition, specific examples of hydrophobic organic solvents are known organic solvents such as hexane, cyclohexane, carbon tetrachloride, chloroform, dichloromethane, 1,2-dichloroethane, diethyl ether, ethyl acetate, benzene and toluene. In this respect, these organic solvents may be used alone or in any combination of at least two thereof.

A hydrophilic organic solvent is preferably used from the industrial standpoint, for instance, from the viewpoint of the permeability thereof into the plant's tissues and the extraction efficiency and it is also preferred to use water-containing hydrophilic organic solvents. Specific examples thereof include alcohols such as methyl alcohol, ethyl alcohol, glycerin, propylene glycol and 1,3-butylene glycol; organic solvents such as acetone, tetrahydrofuran and acetonitrile; and the foregoing solvents containing water. The use of at least one member selected from these solvents would permit the preparation of maslinic acid and/or physiologically acceptable salts thereof incorporated into the

melanogenesis-inhibitory agent for animals and plants according to the present invention, from the olive plants.

The conditions for the extraction are not restricted to specific ones, but the extraction can, for instance, be suitably be carried out at a temperature ranging from 5 to 95°C, preferably 10 to 90°C and more preferably 15 to 85°C. Similarly, the extraction may suitably be carried out at ordinary temperature. In this respect, there is such a tendency that the higher the extraction temperature, the higher the extraction efficiency. The extraction can suitably be conducted at ordinary pressure, under pressure or at a reduced pressure established by, for instance, aspiration. Moreover, the extraction may be carried out by the shaking extraction technique or by the use of an extraction device equipped with, for instance, a stirring machine in order to improve the extraction efficiency. The extraction time may vary depending on other extraction conditions, but it in general ranges from several minutes to several hours and in this respect, the longer the extraction time, the higher the extraction efficiency. However, the extraction time may appropriately be determined while taking into consideration the production conditions such as production facilities and yields.

The amount of the solvent used in the extraction, in all of the cases wherein water is used alone, an organic solvent is used alone or a mixture of water and an organic solvent is used, ranges from 1 to 100 times (mass/mass, the same is true for the following) and preferably 1 to 20 times that of the raw material.

The extraction is preferably carried out using a solvent, in particular, water, water-containing lower alcohol or an anhydrous lower alcohol, while taking into consideration, for instance, the safety thereof to the human bodies.

Moreover, when also taking into consideration the yield of the resulting maslinic acid and/or physiologically acceptable salts thereof and the intensity of the melanogenesis-inhibitory effect thereof, it is preferred to conduct the extraction with a water-containing lower alcohol having a lower alcohol content of not less than 10% by mass. Moreover, it is preferred to use a water-containing alcohol having a lower alcohol content ranging from 10 to 95% by mass and it is most preferred to use a water- containing alcohol whose lower alcohol content is controlled to the range of from 30 to 95% by mass.

In this connection, examples of such alcohols used in the present invention are primary alcohols such as methyl alcohol, ethyl alcohol, 1-propanol and 1-butanol; secondary alcohols such as 2-propanol and 2-butanol; tertiary alcohols such as 2-methyl-2-propanol; and liquid polyhydric alcohols such as ethylene glycol, propylene glycol and 1,3-butylene glycol, which may be used alone or in any combination of at least two thereof.

The term "lower alcohol" herein used means a known alcohol having 1 to 4 carbon atoms such as a primary, secondary, tertiary or a liquid polyhydric alcohol listed above, which may be used alone or in any combination of at least two thereof.

The solvent and/or water can be removed from the crude extract and/or crude extracted liquid thus prepared to obtain maslinic acid and/or physiologically acceptable salts thereof usable in the present invention.

The solvent and/or water can be removed according to any known method such as distillation under reduced pressure, drying under reduced pressure or in vacuo, lyophilization or spray drying technique.

In this respect, the condition of the extract is not particularly restricted and thus the extract may be used without removing any such solvent and/or water.

The extract derived from a defatted product is preferably used herein since it does not contain any oil-soluble component such as triglycerides, sterols and/or tocopherols and therefore, the extract never requires any step for the removal of these components and any purification step. In addition, the defatted product includes the residue obtained after the oil expression and thus the residue remaining after pressing (lees remaining after compression) and the residue remaining after extraction (lees remaining after extraction) obtained after the olive oil expression can be used as such a defatted product. Therefore, the method using such a defatted product permits the quite effective use of the olive. In addition, the method makes use of such a product, which is in general disposed or used as, for instance, a feed and it is quite excellent from the viewpoint of the production cost.

Moreover, to further improve the melanogenesis-inhibitory effect of the maslinic acid and/or physiologically acceptable salts thereof extracted from the olive plants, the resulting extract is preferably subjected to, for instance, a concentration treatment.

The concentration treatment is not restricted to any specific one, but examples thereof include methods, which make use of the difference in solubility in water. The maslinic acid and/or physiologically acceptable salts thereof incorporated into the melanogenesis-inhibitory agent of the present invention are compounds having a relatively low polarity and hardly soluble in water. Accordingly, the crude extract derived from the olive plants can be separated into hardly water-soluble components and/or water-insoluble components or components at least hardly soluble in water and those easily soluble in water to thus significantly concentrate the extract. The components at least hardly soluble in water present in the crude extract derived from the olive plants are quite excellent in the melanogenesis-inhibitory effect as compared with that observed for the overall crude extract from the olive plants and therefore, it can be confirmed that maslinic acid and/or physiologically acceptable salts thereof are substantially concentrated therein.

The components at least hardly soluble in water can easily be obtained by adding the crude extract from the olive plant in water, stirring the resulting mixture and then collecting the precipitated fraction of the mixture through, for instance, filtration.

Moreover, the maslinic acid and/or physiologically acceptable salts thereof incorporated into the melanogenesis-inhibitory agent for animals and plants according to the present invention can, if necessary, be concentrated by the liquid-liquid partition using a combination of the usual solvents. Such a combination of solvents is not unconditionally determined, but examples thereof are combinations of water and hydrophobic organic solvents. In this connection, examples of hydrophobic organic solvents are known organic solvents such as hexane, carbon tetrachloride, chloroform, dichloromethane, 1,2-dichloroethane, diethyl ether, ethyl acetate, n-butanol, benzene and toluene. Among them, preferably used in the invention are hexane, ethyl acetate and n-butanol.

The maslinic acid and/or physiologically acceptable salts thereof are hardly soluble in water and therefore, the hydrophobic organic solvent phase thereof can be dispensed to thus remove unnecessary water-soluble components. In this connection, maslinic acid and/or physiologically acceptable salts thereof can easily be concentrated by the removal of the solvent.

Moreover, the maslinic acid and/or physiologically acceptable salts thereof included in the melanogenesis-inhibitory agent for animals and plants of the present invention are preferably prepared by fractionating and/or purifying the foregoing extract and/or concentrate. This allows the production of an extract having a concentration higher than that of the concentrate obtained above and the isolation of a desired component.

For instance, the foregoing fractionation and/or purification permit not only the substantial improvement of the melanogenesis-inhibitory effect, but also the removal of impurities. In other words, the foregoing fractionation and/or purification permit the preparation of maslinic acid and/or physiologically acceptable salts thereof in the form of white crystals and accordingly, these treatments are preferred since the resulting extract shows such a merit that it can be incorporated into the products of the present invention without undesirably coloring the same.

The methods for the fractionation and/or purification treatments are not unconditionally specified, but examples thereof are recrystallization, fractional precipitation and chromatography techniques. Among the chromatography techniques, the liquid chromatography technique is preferred in the present invention since this technique permits the efficient fractionation and/or purification without decomposing maslinic acid and/or physiologically acceptable salts thereof incorporated into the melanogenesis-inhibitory agent for animals and plants according to the present invention in a high yield. Specific examples of such liquid chromatography techniques are normal phase chromatography, reverse phase chromatography, thin layer liquid chromatography, paper chromatography and high performance liquid chromatography (HPLC) and any one of these chromatography techniques can be used in the fractionation and/or purification treatment of maslinic acid and/or physiologically acceptable salts thereof incorporated into the melanogenesis-inhibitory agent for animals and plants according to the present invention. Preferably used herein are normal phase chromatography, reverse phase chromatography and high performance liquid chromatography (HPLC) techniques while taking into consideration, for instance, the resolution, the loading and the number of required steps.

In this respect, the term "normal phase liquid chromatography" herein used means, for instance, the following method. In other words, this method comprises the steps of preparing a column in which the stationary phase comprises, for instance, silica gel and the mobile phase comprises, for instance, a hexane-ethyl acetate mixed liquid or a chloroform-methanol mixed liquid; supplying a crude extract derived from olive plants or a concentrate thereof to the column at a rate of loading ranging from 0.1 to 5% (wt (mass)/v (volume)); and then eluting a desired fraction according to the continuous elution method using a single mobile phase or the gradient elution method in which the polarity of the solvent or mobile phase is stepwise increased.

The term "reverse phase liquid chromatography" herein used means, for instance, the following method. In other words, this method comprises the steps of preparing a column in which the stationary phase comprises, for instance, silica coupled with octadecyl silane (ODS) and the mobile phase comprises, for instance, a water-methanol mixed liquid, a water-acetonitrile mixed liquid or a water-acetone mixed liquid; supplying a crude extract derived from olive plants or a concentrate thereof to the column at a rate of loading ranging from 0.1 to 5% (wt (mass)/v (volume)); and then eluting a desired fraction according to the continuous elution method using a single solvent or the gradient elution method in which the polarity of the solvent is stepwise increased.

The high performance liquid chromatography (HPLC) technique is, in principle, identical to the foregoing normal liquid chromatography and reverse phase liquid chromatography techniques, but is used for the rapid fractionation-purification treatment at a high resolution.

The use of at least one of the foregoing methods is preferred in the invention since the use thereof would permit the concentration of maslinic acid and/or physiologically acceptable salts thereof to a higher extent and the preparation of a concentrate free of any impurity.

In addition, the use of at least one of the foregoing methods would likewise permit the control of the purity of the resulting maslinic acid and/or physiologically acceptable salts thereof and, if necessary, the arbitrary design of the intensity of the melanogenesis-inhibitory effect and characteristic properties of the same.

The foregoing concentration treatment may preferably be repeated over a desired times or different concentration treatments may be used in combination. Similarly, the fractionation-purification treatments may preferably be repeated over a desired times or different fractionation-purification treatments may likewise be used in combination.

Further, the extract may be subjected first to a concentration treatment and then to a fractionation-purification treatment or it may be subjected first to a fractionation- purification treatment and then to a concentration treatment or further it may be subjected to a concentration treatment, a fractionation-purification treatment and a concentration treatment in this order. Naturally, any combination of these treatments may be selected in addition to the foregoing ones.

Moreover, when the compound selected from the group consisting of pentacyclic triterpenes, physiologically acceptable salts thereof and derivatives thereof used as an effective component in the present invention is present in the feed, fertilizer or composition of the present invention in an effective and required amount, the compound shows a blackening/browning-inhibitory effect. The desired blackening/browning- inhibitory effect can be obtained even when the effective component of the present invention is in the form of an extract derived from natural plant's bodies such as olive plants or a defatted product obtained in the olive oil-manufacturing processes, a concentrate thereof, a roughly purifies product or a purified product thereof. The extract derived from the olive plants contains maslinic acid in a concentration, which may vary depending on methods and conditions for the extraction and conditions for concentration and/or purification. In particular, the maslinic acid content thereof increases as the extract is concentrated and/or purified and therefore, the blackening/ browning-inhibitory effect thereof is likewise improved. In other words, it would be concluded that when the maslinic acid is present in the same concentration, the higher the degree of the concentration and/or purification, the higher the blackening/browning- inhibitory function of the extract.

The foregoing treatments such as extraction, concentration, fractionation and/or purification treatments may variously be combined to thus suitably obtain maslinic acid and/or physiologically acceptable salts thereof. The combination of these treatments is not restricted to any specific one, but specific examples of such a series of treatments are as follows.

For instance, olive plants are extracted with water and/or a hydrophilic organic solvent, a part or the whole of the hydrophilic organic solvent is removed from the resulting extract, it is stirred after the optional addition of water and then water insolubles separated from the aqueous phase are recovered to concentrate the extract. The separated water insolubles may be recovered by, for instance, filtration or centrifugal separation, but it may, if necessary, be possible to add water to the aqueous solution and/or to stir the solution for the improvement of the recovery efficiency. Moreover, regarding the product obtained by removing the water and/or hydrophilic organic solvent from the extract derived from the olive plants through the evaporation of the extract to dryness, it may be possible to add water to the dried product and/or to stir the resulting mixture and then the water insolubles can be recovered through, for instance, the filtration thereof to thus give a concentrate. This concentration method is quite preferred since it comprises treatments in an aqueous system, the method is thus excellent in safety as compared with the concentration using a solvent and it permits the use of wide variety of machinery and tools. Moreover, the method is also preferred since the extract is almost free of any oil component and the method is accordingly excellent in the concentration and/or purification efficiency.

These concentrates can be fractionated and/or purified by normal phase and/or reverse phase liquid chromatography and/or recrystallization to thus suitably give maslinic acid and/or physiologically acceptable salts thereof in highly purified states.

In this respect, the amount of water to be added in the liquid-liquid partition is not limited to any specific one insofar as it is sufficient for carrying out the partition treatment, but it preferably ranges from 1 to 100 times, more preferably 5 to 50 times and further preferably about 10 to 30 times the mass of the dried extract.

Moreover, in the liquid-liquid partition in a water-hydrophobic organic solvent system, the water and the hydrophobic organic solvent are preferably used in a ratio: water: hydrophobic organic solvent ranging from 9:1 to 1:9 (as expressed in terms of the volume ratio) and more preferably 8:2 to 2:8.

In addition, the total content of maslinic acid and physiologically acceptable salts present in the mixture containing maslinic acid and physiologically acceptable salts and obtained from olive plants and/or the product obtained in the olive oil manufacturing processes is preferably not less than 95% and more preferably 95% to 99.99%. This content can, for instance, be determined by the gas chromatography technique.

Further, it is possible that the hydrophilic organic solvent is removed from the liquid extracted from the olive plants, that water is, if necessary, added to the remaining aqueous solution and that a hydrophobic organic solvent is further added thereto in order to concentrate the extracted liquid through the liquid-liquid partition in a water-hydrophobic organic solvent system. Further, the extract in its dried condition can be concentrated by adding water to the extract and further adding a hydrophobic organic solvent to the resulting mixture, according to the liquid-liquid partition in a water-hydrophobic organic solvent system, like the foregoing method. These concentrates can be fractionated and/or purified by normal phase and/or reverse phase liquid chromatography and/or recrystallization to thus give maslinic acid and/or physiologically acceptable salts thereof in highly purified states.

The melanogenesis-inhibitory agent for animals and plants according to the present invention may comprise maslinic acid and/or physiologically acceptable salts thereof and the melanogenesis-inhibitory agent for animals and plants according to the present invention can likewise be obtained by the use of the foregoing extract and concentrate. In addition, the control of the degree of, for instance, the concentration and/or purification permits the adjustment of,

for instance, the concentration of melanogenesis-inhibitory agent for animals and plants and the resulting product can suitably be incorporated into the melanogenesis-inhibitory agent for animals and plants.

The olive oil comprises maslinic acid and therefore, it is preferred to use the olive oil, as an oily component, in the melanogenesis-inhibitory agent for animals and plants, the raw material for the inhibitory agent, the feed, the fertilizer and the blackening/browning-inhibitory composition according to the present invention since the resulting products may show an effective melanogenesis-inhibitory effect and a blackening/browning-inhibitory effect.

When extracting maslinic acid and/or physiologically acceptable salts thereof from the olive plants, oleanolic acid and/or physiologically acceptable salts thereof are simultaneously extracted. In this respect, the oleanolic acid and/or physiologically acceptable salts thereof are excellent in the compatibility with maslinic acid and accordingly, a mixture comprising these substances can directly be incorporated into the melanogenesis-inhibitory agent for animals and plants according to the present invention. In this case, the resulting product would show an additive effect between the effects of the corresponding components and, in particular, an additive effect can be expected with respect to the desired melanogenesis-inhibitory effect achieved by maslinic acid and/or physiologically acceptable salts thereof. When maslinic acid and/or physiologically acceptable salts thereof are, for instance, extracted and isolated from the olive plants and then purified, the conditions therefor can be adjusted to obtain these compounds in the form of a mixture with oleanolic acid and/or physiologically acceptable salts thereof, while it is also possible to obtain such a mixture by separately isolating, from the olive plants, maslinic acid and/or physiologically acceptable salts thereof, and oleanolic acid and/or physiologically acceptable salts thereof and then mixing these components separately isolated. Alternatively, such a mixture may be one obtained by admixing maslinic acid and/or physiologically acceptable salts thereof, and oleanolic acid and/or physiologically acceptable salts thereof, which are prepared from different raw materials, respectively.

The present invention relates to a melanogenesis-inhibitory agent for animals and plants comprising, as an effective component, at least one member selected from the group consisting of the foregoing pentacyclic triterpenes and physiologically acceptable salts or derivatives thereof.

The expression "comprising as effective component" herein used means that the agent comprises the foregoing component in an amount sufficient for showing the desired melanogenesis-inhibitory effect and therefore, the content thereof in the melanogenesis-inhibitory agent for animals and plants according to the present invention may appropriately be controlled while taking into consideration a variety of factors such as the kinds of the pentacyclic triterpenes used, the manner of the use thereof, the purposes of the use thereof, the amount thereof to be incorporated, the frequency of the use thereof and the degree of the melanogenesis and the content cannot unconditionally be determined. However, the content thereof is, for instance, but is not restricted to not less than 0.00001% by mass, preferably 0.00001 to 99.99% by mass, more preferably 0.0001 to 99.99% by mass, further preferably 0.0005 to 99.99% by mass, still further preferably 0.001 to 99.99% by mass, further preferably 0.005 to 99.99% by mass, still further preferably 0.01 to 99.99% by mass, further preferably 0.05 to 99.99% by mass, still further preferably 0.1 to 99.99% by mass, further preferably 0.5 to 99.99% by mass and still further preferably 1 to 99.99% by mass.

The inventors of this invention have found that pentacyclic triterpenes and/or physiologically acceptable salts thereof or derivatives thereof show an excellent melanogenesis-inhibitory effect and that maslinic acid and/or physiologically acceptable salts thereof or derivatives thereof show an extremely excellent melanogenesis-inhibitory effect, among others.

In the present invention, the term "melanogenesis-inhibitory effect" means an effect of inhibiting or preventing the production of melanin dyestuff tinted with a black to brown color and generated as a result of the living activities of animals and plants and it is quite effective for the prevention of any color change and/or the freshness retention of, for instance, animal and/or plant bodies and/or a part thereof and/or foods, which make use of a part of these animal and/or plant bodies as raw materials. It has in general been known that the melanogenesis becomes a cause of the blackening and/or browning phenomena of perishable foods such as meat, fishes and vegetables as well as a cause of the dark color-developing and color-fading phenomena of, for instance, pet animals and aquarium fishes due to blackening or the like. For this reason, the control of the melanin-production would permit the significant improvement in the commercial values of perishable foods such as meat, fishes and vegetables; pet animals; and animals and plants for admiration.

In the present invention, the melanogenesis-inhibitory effect is evaluated and compared on the basis of the results of tests for examining the melanogenesis-inhibitory function in which B-16 melanoma cells are cultivated, as a primary evaluation. Moreover, a feed is, for instance, practically prepared and its effectiveness in the melanogenesis-inhibition is evaluated as a secondary evaluation. It has been confirmed that the pentacyclic triterpenes whose strong melanogenesis-inhibitory function is confirmed by the cell culture test as the primary evaluation also show an excellent effect in the secondary evaluation test. In addition, it has also been confirmed that there is a correlation between the results obtained in these two evaluation methods.

The B-16 melanoma cells possess a melanin-producing ability and the cells naturally grown or proliferated during the cultivation are tinted with black. If the culture system includes a melanogenesis-inhibitory substance during

the proliferation thereof, the blackening of the cells is suppressed while the whitening thereof is relatively promoted. Accordingly, the melanogenesis-inhibitory function of the substance can be evaluated by comparing the degree of whitening observed for the substance with the degree of blackening observed for a control. The evaluated results of the melanogenesis-inhibitory effect obtained in this cell culture system clearly indicate that the pentacyclic triterpenes and/or physiologically acceptable salts thereof or derivatives thereof have quite strong melanogenesis-inhibitory effects. For instance, when comparing the effects thereof with that achieved by vitamin C-magnesium phosphate, the melanogenesis-inhibitory effect is about 100 to 200 times, for maslinic acid, about 100 to 200 times, for maslinic acid salts, about 10 to 100 times, for erythrodiol, about 30 to 120 times, for uvaol, about 30 to 120 times, for betulinic acid, about 10 to 100 times, for betulin, about 100 to 200 times, for ethyl maslinate, about 50 to 150 times, for acetylated maslinic acid, about 30 to 120 times, for triethylsilylated maslinic acid, about 50 to 150 times, for stearoyl derivative of ethyl maslinate, about 10 to 100 times, for acetylated erythrodiol, about 10 to 100 times, for acetylated uvaol, about 10 to 100 times, for ethyl betulinate, and about 5 to 50 times, for acetylated betulin, that observed for the vitamin C-magnesium phosphate.

As has been described above, the control of any production of melanin would permit the prevention and/or elimination of the blackening and/or browning phenomena of perishable foods such as meat, fishes and vegetables. In this respect, the melanogenesis-inhibitory agent for animals and plants according to the present invention would permit the control of the melanogenesis to its lowest possible level because of the strong melanogenesis-inhibitory effect of the pentacyclic triterpenes and/or physiologically acceptable salts or derivatives thereof incorporated into the inhibitory agent and accordingly, the inhibitory agent can ensure the prevention and elimination of the blackening and/or browning phenomena of perishable foods such as meat, fishes and vegetables.

In the secondary evaluation of the melanogenesis-inhibitory effect, it is possible to confirm the effectiveness of, for instance, a feed practically prepared. For example, the melanogenesis-inhibitory effect can practically be evaluated by preparing a feed comprising at least one member selected from the group consisting of pentacyclic triterpenes and/or physiologically acceptable salts or derivatives thereof incorporated into the same and then carrying out an animal test using the resulting feed. More specifically, the effectiveness of a feed can be confirmed by breeding red sea breams with a feed thus prepared and the usual feed and then determining any blackening of the body color thereof using a color difference meter to thus evaluate the degree of the body color blackening-inhibition. Alternatively, when the fishes are cut into slices, to which the usual consumers frequently encounter, and black lines observed within the fish meat because of the melanogenesis are determined, it would be found that the number of such black lines is small in the fishes bred with the prepared feed and the latter is closer to the natural fishes as compared with the red sea breams bred with the usual feed. In such evaluation, the pentacyclic triterpenes and/or physiologically acceptable salts or derivatives thereof used in the present invention show a melanogenesis-inhibitory effect equal to or superior to that observed for a feed comprising, for instance, kojic acid.

With respect to the blackening of fishery products and perishable foods such as plants, for instance, vegetables and fruits, the desired effect of the foregoing substances used in the invention can likewise be evaluated by dissolving, in water, a composition containing at least one member selected from the group consisting of the pentacyclic triterpenes and/or physiologically acceptable salts or derivatives thereof used in the invention to thus prepare a processing solution, treating each subject to be tested and then determining the degrees of blackening or browning of the subjects. More specifically, shrimps as a fishery product undergoing blackening and apples as an edible plant body causing browning are immersed in the processing solution prepared above and the degrees of the blackening and browning of these foods observed after storing and/or allowing them to stand over a predetermined period of time are evaluated on the basis of 5-stage evaluation criteria. As a result, it would be recognized that the progress of blackening and/or browning is clearly slow or small in the foods treated with the composition of the present invention and the composition of the invention is effective for controlling such blackening and/or browning. In such evaluation, it is clear that the pentacyclic triterpenes and/or physiologically acceptable salts or derivatives thereof used in the invention possess excellent melanogenesis-inhibitory effects.

The effect of the present invention can be expressed in terms of blackening/ browning-inhibitory indexes. The blackening/ browning-inhibitory index can be defined by the following equation: Blackening/Browning-Inhibitory Index = [(L value observed for the body surface of an animal or plant body to which a blackening/browning-inhibitory agent of the invention or a comparative agent is administered or applied)/(L value observed for the body surface of an agent-free animal or plant body)] $\times$ 100

The effect of the present invention can likewise be expressed in terms of intensity indexes for blackening/ browning-inhibition. More specifically, kojic acid possesses a function to prevent blackening/browning of the body surface of an animal or plant body as has been described above. For this reason, the intensity of preventing blackening/ browning can be evaluated by comparing with the effect observed when kojic acid is used as a known blackening/ browning-inhibitory agent. Therefore, the intensity indexes for blackening/browning-inhibition can be defined by the following equation:

Intensity Indexes for Blackening/Browning-Inhibition = [(L value observed for the body surface of an animal or plant body to which a blackening/browning-inhibitory agent of the invention is administered or applied)/(L value observed for the body surface of an animal or plant body to which kojic acid is administered or applied)] $\times 100$

In this respect, however, the agent of the present invention and a comparative agent containing the same amounts of the blackening/browning-inhibitory component and kojic acid are compared with one another.

Alternatively, the blackening/browning-inhibitory effect of the present invention can likewise be evaluated using an index concerning the color. For instance, L values, a values and b values permit the expression of colors very close to the human impression since all the colors are arranged within a space having a scale almost identical to the feeling of the human being. In this case, the brightness of color is expressed in terms of L values ranging from 0 to 100 and the higher the brightness of color or the higher the lightness, the larger the L value. These values can in general be used for the evaluation of the appearance of a subject blackened due to the melanin accumulation and the correlation between the appearance visually evaluated and the L values or the like as will be demonstrated in Examples described later. In some cases, however, the blackening/browning-inhibitory effect visually evaluated is high although the difference in L values is small.

The melanogenesis-inhibitory agent for animals and plants according to the present invention may comprise at least one member selected from the group consisting of the foregoing pentacyclic triterpenes and physiologically acceptable salts thereof or derivatives thereof or the inhibitory agent may likewise be in the form of a composition comprising, as an effective component, at least one member selected from the group consisting of the foregoing pentacyclic triterpenes and physiologically acceptable salts thereof and an appropriate diluent or a carrier. In this respect, examples of such diluents or carriers are solid diluents or carriers such as gum Arabic, xanthane gum, dextrin, cyclodextrin, starch, glucose, sucrose, lactose, xylose, galacto-oligosaccharides and xylo-oligosaccharides, and liquid diluents or carriers such as water, ethanol, propylene glycol, glycerin and emulsifying agents, which may be incorporated into the composition alone or in any combination of at least two thereof. Among emulsifying agents, those preferably used as lipophilic emulsifying agents are a variety of commercially available glycerin fatty acid esters, propylene glycol fatty acid esters, sorbitan fatty acid esters, saccharose fatty acid esters, polyglycerin fatty acid esters, pentaerythritol fatty acid esters, polyoxyethylene sorbit fatty acid esters, polyoxyethylene glycol fatty acid esters, polyoxyethylene alkyl ethers, polyoxyethylene phenyl ethers, polyoxyethylene castor oil, polyoxyethylene hardened castor oil and lecithin.

Examples of hydrophilic emulsifying agents preferably used herein include a variety of commercially available anionic, nonionic, cationic and amphoteric ones.

Examples of anionic emulsifying agents are carboxylic acids such as soap, N-acylamino acid salts, alkyl ether carboxylic acids and acylated peptides; sulfonic acid salts such as alkyl sulfonic acid salts, alkylbenzene-sulfonic acid salts, alkyl- naphthalene-sulfonic acid salts and formalin-condensates thereof, dialkyl-sulfo- succinate salts, $\alpha$-olefin sulfonic acid salts and N-acylmethyl taurine; sulfuric acid ester salts such as sulfated oils, alkyl sulfates, alkyl ether sulfates, alkyl allyl ether sulfates and alkyl-amide sulfates; and phosphoric acid ester salts such as alkyl-phosphoric acid salts, alkyl ether phosphoric acid salts and alkyl allyl ether phosphoric acid salts. In addition, examples of nonionic emulsifying agents are ether type surfactants such as polyoxyethylene alkyl ether, polyoxyethylene secondary alcohol ether, polyoxyethylene alkyl phenyl ether, ethylene oxide derivatives of alkyl phenol-formalin condensates and polyoxyethylene polyoxypropylene block copolymers; ether ester type surfactants such as polyoxyethylene glycerin fatty acid esters, polyoxyethylene castor oil and hardened castor oil, polyoxyethylene sorbitan fatty acid esters and polyoxyethylene sorbitol fatty acid esters; ester type surfactants such as polyoxyethylene glycol fatty acid esters, fatty acid monoglycerides, sorbitan fatty acid esters, sucrose fatty acid esters and polyglycerin fatty acid esters; and nitrogen atom-containing surfactants such as fatty acid alkanolamides, polyoxyethylene fatty acid amides, polyoxyethylene alkylamines and alkylamine oxides. Examples of cationic emulsifying agents are alkylamine salts, quaternary ammonium salts, benzalkonium salts and pyridinium salts and examples of amphoteric emulsifying agents are carboxy betaine type ones, aminocarboxylic acid salts, imidazolinium betaines and lecithin.

Moreover, the present invention also relates to a raw material for a melanogenesis-inhibitory agent for animals and plants comprising at least one member selected from the group consisting of the pentacyclic triterpenes and physiologically acceptable salts thereof or derivatives thereof. In this respect, among the foregoing pentacyclic triterpenes, preferred are oleanane triterpenes, ursane triterpenes and lupane triterpenes. Moreover, preferred oleanane triterpenes are maslinic acid and/or erythrodiol, in particular, maslinic acid. Preferred ursane triterpenes are ursolic acid and/or uvaol. Preferred lupane triterpenes are betulinic acid and/or betulin. When using these substances as raw materials, they are preferably used in high concentrations. In this case, the foregoing at least one member selected from the group consisting of pentacyclic triterpenes and physiologically acceptable salts thereof or derivatives thereof are not particularly limited in their origins and may be those derived from natural substances and artificially synthesized ones, but the purity thereof is preferably as high as possible since they are used for inhibiting the melanogenesis. The use of the foregoing substances having high purities would permit, for instance, the substantial improvement of the melanogenesis-inhibitory effect thereof and the removal of impurities. More specifically, the use thereof can greatly contribute to the improvement of, for instance, the quality of the resulting products and would permit, for instance, the elimination of any risk such as unpredictable side effects due to such impurities and any unpredictable trouble encountered during the production of a melanogenesis-inhibitory agent and the improvement of handling properties. Accordingly, the purity thereof is preferably as high as possible. In addition, the improvement of the purities of these substances by the isolation and/or purification treatments would in general permit the production of the foregoing at least one member selected from the group consisting of pentacyclic triterpenes and physiologically acceptable salts thereof or derivatives thereof used in the present invention in the form of, for instance, white or colorless solids, semisolids or liquids and accordingly, the use of these substances is preferred since they show such a merit that they can be incorporated into the melanogenesis-inhibitory agent without undesirably coloring the same. The purity of at least one member selected from the group consisting of pentacyclic triterpenes and physiologically acceptable salts thereof or derivatives thereof used in the raw material for the melanogenesis-inhibitory agent of the invention is preferably as high as possible as has been described above, but it cannot unconditionally be determined and appropriately be determined while taking into consideration a variety of factors such as the kinds of triterpenes, the purpose of the use thereof, the manner of administration thereof, the production methods and the production cost. Accordingly, in the present invention, it is, for instance, but is not restricted to, not less than 0.1% by mass, preferably 0.1 to 99.99% by mass, more preferably 1 to 99.99% by mass, further preferably 10 to 99.99% by mass, still further preferably 30 to 99.99% by mass, further preferably 50 to 99.99% by mass, further preferably 70 to 99.99% by mass and further preferably 90 to 99.99% by mass. If the purity falls within the foregoing range, the foregoing effective component can preferably be used in the preparation of a melanogenesis-inhibitory agent or incorporated into a feed or a fertilizer and thus, the component appropriately shows its melanogenesis-inhibitory effect.

Subjects to which the melanogenesis-inhibitory agent for animals and plants according to the present invention is applied to control or prevent any melanogenesis therein are, for instance, animal and plant bodies and/or a part thereof and/or foods comprising a part of the animal and plant bodies as raw materials and specific examples thereof include fishery products (fishes and shellfishes) such as tunas, salmons, trouts and red sea breams; crustaceans such as shrimps, crabs and krills; mollusks such as octopuses and cuttlefishes; shellfishes such as scallops, abalones and ark shells; processed marine products such as fish meat sausage, boiled fish paste, Chikuwa (a kind of fish meat paste), salted fishes and dried fishes; processed livestock products such as livestock meat, ham and sausage; vegetables such as carrot, green pepper, lettuce, cabbage, lotus root, burdock and eggplant; perishable and processed products of vegetables and cereals such as cut vegetables, dried gourd shavings, konjak powder, processed potato products, sweetened adzuki beans and boiled beans; seaweeds; fungi such as mushrooms; fruits such as apples, peaches, grapes, oranges and bananas; perishable and processed products of fruits such as cut fruits, dried fruits, fruit juices and fruit wines.

Moreover, it is herein intended that the animal and plant bodies, to which the melanogenesis-inhibitory agent for animals and plants according to the invention is administered or applied, also include those other than edible ones such as animals and plants for petting or admiration or those used as the interior. Specific examples thereof include mammals such as dogs, cats and hamsters; reptiles such as turtles, tortoises, snakes, lizards, crocodiles and alligators; birds such as budgerigars and parrots; amphibians such as frogs and newts; crustaceans such as shrimps and crabs; fishes such as butterfly fishes, colored carps and wakin goldfishes; aquatic invertebrates represented by shellfishes, sea anemones and soft choral; aquatic plants such as water grasses; submerged plants; flowering plants; turfs; foliage plants; trees; and plant bodies used for admiration.

As has been described above, the melanogenesis-inhibitory agent for animals and plants according to the present invention is used for controlling or preventing any melanogenesis in, for instance, perishable foods, processed foods and animals and plants for petting and/or admiration, but the manner of the use thereof may vary depending on the kinds of subjects and cannot unconditionally be determined. Therefore, the methods for using the melanogenesis-inhibitory agent for animals and plants according to the present invention are, for instance, those listed below, but the present invention is not restricted to these specific ones at all. For instance, in case of animal bodies having living activities, the melanogenesis-inhibitory agent of the invention is incorporated into a feed for the same and they are bred with the resulting feed or the inhibitory agent may be administered to the animal bodies in the form of, for instance, a variety of tablets, capsules or powders through the oral route or in the form of, for instance, various kinds of injections, suppositories, liquids for external use or ointments through the parenteral route. In particular, when applying the agent

to fishes and shellfishes, the agent may be admixed with the aqueous environment for raising the same to thus bring the agent into contact with the fishes and shellfishes. In other words, the purposes of the foregoing methods are to preliminarily let the animal bodies as subjects absorb the pentacyclic triterpenes and physiologically acceptable salts thereof or derivatives thereof while the animals are still alive and to thus control or inhibit any melanogenesis in the subject. Alternatively, in case of, for instance, animal bodies whose living activities are terminated or foods consisting of or comprising the same, the melanogenesis-inhibitory agent of the invention may directly be added, applied to these foods or sprayed thereon, or a solution containing the agent is sprayed on the foods or the latter may be immersed in the solution. Further, in case of, for instance, plant bodies in raising, the melanogenesis-inhibitory agent of the invention can be administered or applied thereto in the form of, for instance, a fertilizer or a nutrient or through absorption, or the agent may directly be injected into the plant bodies through, for instance, injection or it may be applied to the plant bodies through, for instance, coating and spraying. In this case, the purposes of the foregoing methods are to preliminarily let the plant bodies as subjects absorb the pentacyclic triterpenes and physiologically acceptable salts thereof or derivatives thereof while the plants are still alive and to thus control or inhibit any melanogenesis in the subject. Moreover, in case of, for instance, parts of animals and plants, which are usually eaten or processed products thereof, the melanogenesis-inhibitory agent of the invention can directly be, for instance, added to, applied to or sprayed on these foods or the foods are sprayed with or immersed in a solution of the agent. The effects of the present invention will more clearly be demonstrated in Examples, but the present invention is not limited to such specific Examples at all.

In addition to the foregoing, it would be expected that the melanogenesis-inhibitory agent for animals and plants according to the invention can indirectly control or prevent any melanogenesis in, for instance, perishable foods, processed foods and animals and plants for petting and/or admiration as well as human beings. The manner of the use thereof may vary depending on the kinds of subjects and cannot unconditionally be determined. Therefore, the methods for using the melanogenesis-inhibitory agent for animals and plants according to the present invention are, for instance, those listed below, but the present invention is not restricted to these specific ones at all. For instance, in case of an animal body, which is in breeding, the melanogenesis-inhibitory agent for animals and plants according to the present invention is administered thereto through the oral route or through, for instance, injection to thus permit the accumulation of the melanogenesis-inhibitory component in the subject or the animal and then the resulting animal body containing accumulated inhibitory agent may be administered to another animal body or human body. More specifically, it is preferred to feed a compound selected from the group consisting of pentacyclic triterpenes, physiologically acceptable salts thereof and derivatives thereof to a desired animal body till the blackening/browning-inhibitory index is preferably not less than 115, more preferably not less than 120 and further preferably not less than 123. Alternatively, it is preferred to feed a pentacyclic triterpene or the like to a desired animal body till the intensity indexes for blackening/browning-inhibition is preferably not less than 110, more preferably not less than 114, further preferably not less than 116 and particularly preferably not less than 120. Moreover, the inhibitory agent is incorporated into, for instance, a fertilizer and the resulting fertilizer is then applied to a plant body. Moreover, the melanogenesis- inhibitory agent for animals and plants according to the present invention is applied to plant bodies, which are in breeding, in the form of a fertilizer or a nutrient so that animal bodies, human bodies or other plant bodies can then ingest or absorb the resulting plant body. For instance, if a person ingests the resulting plant body, it may be in the form of a food or a beverage. In this case, the food or beverage has a high content of the pentacyclic triterpenes and physiologically acceptable salts thereof or derivatives thereof since the subject or an animal or plant body may absorb these effective components during the growth thereof. For this reason, the melanogenesis in the human body is efficiently controlled or prevented by the ingestion of these food or beverage or a raw material therefor. Similarly, they may be applied to animals and plants in the form of a feed or fertilizer therefor to thus effectively inhibit any melanogenesis therein.

The amount of the melanogenesis-inhibitory agent for animals and plants according to the present invention to be applied to, for instance, the foregoing perishable foods, processed foods and/or animals and plants for petting and/or admiration may vary depending on a variety of factors such as the kinds of pentacyclic triterpenes incorporated into the agent, the kinds of subjects, the amount of the agent used, the frequency of the use thereof, and age, sexes, body weights and the degrees of symptoms of each specific subject to which the agent is administered and it cannot accordingly unconditionally be determined, but it should be one effective for inhibiting or preventing any melanogenesis in the subject. The amount thereof is, for instance, but is not limited to, the range of from 0.0001 to 50% by mass, preferably 0.001 to 30% by mass, more preferably 0.01 to 20% by mass, further preferably 0.1 to 10% by mass and particularly preferably 0.1 to 5% by mass, in case of the direct administration and 0.001 to 30% by mass, preferably 0.01 to 20% by mass and more preferably 0.1 to 10% by mass in case of the indirect administration such as immersion, on the basis of the mass of the subject, when simply using at least one member selected from the group consisting of pentacyclic triterpenes and physiologically acceptable salts thereof or derivatives thereof. If the foregoing component is used in an amount of less than that specified above, the resulting melanogenesis-inhibitory effect is insufficient, while if it is used in an amount of greater than 50% by mass, it is not expected to obtain any further improvement of the effect in proportion to the amount of the component added and this is disadvantageous from the economical standpoint.

Moreover, the melanogenesis-inhibitory agent for animals and plants according to the present invention can be used in the form of a variety of feeds to make the use of its melanogenesis-inhibitory effect. In other words, the present invention relates to a feed containing a raw material for preparing a melanogenesis- inhibitory agent for animals and plants, which comprises, as an effective component, at least one member selected from the group consisting of pentacyclic triterpenes and physiologically acceptable salts thereof or derivatives thereof. In this respect, among the foregoing pentacyclic triterpenes, preferred are oleanane triterpenes, ursane triterpenes and lupane triterpenes. Moreover, preferred oleanane triterpenes are maslinic acid and/or erythrodiol, in particular, maslinic acid. Preferred ursane triterpenes are ursolic acid and/or uvaol. Preferred lupane triterpenes are betulinic acid and/or betulin. Moreover, particularly preferred pentacyclic triterpenes usable herein are maslinic acid or ursolic acid. The feed of the present invention preferably further comprises at least one member selected from the group consisting of antioxidants, organic acids and salts thereof, and phosphoric acid and salts thereof. The feed of the present invention preferably comprises fish meal and/or soybean lees, and maslinic acid or ursolic acid as an effective component and at least one member selected from the group consisting of vitamin C, vitamin E and isoflavone as an antioxidant. Examples of the foregoing feed include, but are not limited to, those for the domestic animals such as cattle, pigs, horses and rabbits; feeds for domestic fowls such as chickens, turkeys and quails; feeds for marine and limnetic cultivated fishes and marine and limnetic aquarium fishes such as yellowtails, flatfishes, Fugu rubripes, ayu, trouts and salmons, butterfly fishes and wakin goldfishes; feeds for fishes and shellfishes for cultivation, admiration and petting, for instance, crustaceans, amphibians and shellfishes such as shrimps, crabs, abalone, turban shells, snapping turtles, turtles and frogs; pet foods for breeding pet animals such as dogs, cats and monkeys; feeds for insects; feeds used in zoos; and feeds for treating animals. These feeds may have any shape depending on various applications. For instance, they may be in the form of powders, liquids, gels, dry foods, semi-moistened foods, canned foods, tablet-like confectionery and tablets. Examples of the methods for adding the foregoing effective component to feeds or admixing the former with the latter include, but are not limited to, a method in which the effective component is added to feeds in the form of a feed composition, a method in which the effective component in the form of a powder or a liquid is admixed with a feed or a method for adding and adhering the component to feeds through spraying as well as a method comprising admixing the foregoing feeds with other feeds and a method comprising adding the component to feeds as an additive.

The content of the melanogenesis-inhibitory agent for animals and plants in the feed according to the present invention may vary depending on a variety of factors such as the kinds of pentacyclic triterpenes incorporated into the feed, the shapes of the fertilizer, the purposes of the use thereof, the amount of the fertilizer used, the frequency of the use thereof, and species, sexes, body weights and the degrees of symptoms of each specific subject to which the feed is administered and it cannot accordingly unconditionally be determined. The amount thereof is, for instance, but is not limited to, the range of from 0.00001 to 50% by mass, preferably 0.0001 to 30% by mass, more preferably 0.001 to 20% by mass, further preferably 0.01 to 10% by mass and particularly preferably 0.1 to 5% by mass, in case of the direct administration and 0.001 to 30% by mass, preferably 0.01 to 20% by mass and more preferably 0.1 to 10% by mass (in the form of a solution having such a concentration) in case of the indirect administration such as immersion, on the basis of the mass of the subject, when simply using at least one member selected from the group consisting of pentacyclic triterpenes and physiologically acceptable salts thereof or derivatives thereof.

Moreover, the melanogenesis-inhibitory agent for animals and plants according to the present invention can be used in the form of a variety of fertilizers to make the use of its melanogenesis-inhibitory effect. In other words, the present invention relates to a fertilizer containing a raw material for preparing a melanogenesis-inhibitory agent for animals and plants, which comprises, as an effective component, at least one member selected from the group consisting of pentacyclic triterpenes and physiologically acceptable salts thereof or derivatives thereof. In this respect, among the foregoing pentacyclic triterpenes, preferred are oleanane triterpenes, ursane triterpenes and lupane triterpenes. Moreover, preferred oleanane triterpenes are maslinic acid and/or erythrodiol, in particular, maslinic acid. Preferred ursane triterpenes are ursolic acid and/or uvaol. Preferred lupane triterpenes are betulinic acid and/or betulin. Moreover, particularly preferred pentacyclic triterpenes usable herein are maslinic acid or ursolic acid. The fertilizer of the present invention preferably further comprises at least one member selected from the group consisting of antioxidants, organic acids and salts thereof, and phosphoric acid and salts thereof. The fertilizer of the present invention preferably comprises maslinic acid or ursolic acid as an effective component, an oil meal and a mixture of minerals. Examples of the subjects to which the foregoing fertilizer is applied include, but are not limited to, cereals such as rice plants and wheat plants; green vegetables such as cabbages, lettuces and spinaches; edible roots such as burdock, turnips, Japanese radishes and carrots; fruit vegetables such as tomatoes and strawberry; fruit trees such as apple, pear, grape and peach trees; flowering plants such as pansy and lily; lawn grasses such as Korean lawn grass and bent lawn grass; and plants for admiration such as gum trees, dracaena and maidenhair.

The content of the melanogenesis-inhibitory agent for animals and plants in the fertilizer according to the present invention may vary depending on a variety of factors such as the kinds of pentacyclic triterpenes incorporated into the fertilizer, the shapes of the fertilizer, the purposes of the use thereof, the amount of the fertilizer used, the frequency of the use thereof, and species, sexes, body weights and the degrees of symptoms of each specific subject

to which the fertilizer is applyed and it cannot accordingly unconditionally be determined. When simply using at least one member selected from the group consisting of pentacyclic triterpenes and physiologically acceptable salts thereof or derivatives thereof, the amount of the fertilizer is, for instance, but is not limited to, the range of from 0.0001 to 30% by mass, preferably 0.001 to 20% by mass, more preferably 0.01 to 15% by mass, further preferably 0.1 to 10% by mass and particularly preferably 0.1 to 5% by mass on the basis of the mass of the subject, in case where the fertilizer is admixed with the soil or injected into the soil through showering and, in case where the fertilizer is used as a culture medium, the amount thereof used ranges from 0.001 to 20% by mass, preferably 0.01 to 10% by mass and more preferably 0.1 to 5% by mass on the basis of the mass of the culture medium.

The present invention further relates to a method for preventing or improving any blackening and/or browning of animal and plant bodies and the method comprises the steps of (a) preparing a solution by dissolving a compound selected from the group consisting of pentacyclic triterpenes, physiologically acceptable salts thereof and derivatives thereof in water and (b) immersing an animal or plant body in the solution prepared in the step (a). However, it is also possible to supply a compound selected from the group consisting of pentacyclic triterpenes, physiologically acceptable salts thereof and derivatives thereof to the animal or plant used in the foregoing step (b), prior to the immersion of the subject in the solution prepared in the step (a). In this respect, it is preferred that, in the step (a), the solution is prepared by dissolving maslinic acid, citric acid and sodium citrate in water.

In this case, the content of maslinic acid in the solution for immersion preferably ranges from 0.0001 to 5% by mass, more preferably 0.001 to 1% by mass and further preferably 0.01 to 0.5% by mass. When preparing a solution for immersion using an extract, the amount of the extract to be added to the solution preferably ranges from 0.0001 to 50% by mass, more preferably 0.001 to 30% by mass and further preferably 0.01 to 20% by mass.

Further, the present invention relates to a blackening/browning-inhibitory composition comprising at least one member selected from the group consisting of pentacyclic triterpenes, physiologically acceptable salts thereof or derivatives thereof and the present invention preferably relates to a blackening/browning-inhibitory composition applied to foods, which comprises at least one member selected from the group consisting of pentacyclic triterpenes, physiologically acceptable salts thereof or derivatives thereof and at least one member selected from the group consisting of antioxidants, organic acids and salts thereof and phosphoric acid and salts thereof. As has been described above, these pentacyclic triterpenes, physiologically acceptable salts thereof or derivatives thereof possess excellent melanogenesis-inhibitory effects, but they can further effectively control or prevent any blackening and/or browning if they are simultaneously used in combination with at least one member selected from the group consisting of antioxidants, organic acids and salts thereof and phosphoric acid and salts thereof.

In this connection, the feed, fertilizer or composition for preventing or controlling any blackening and/or browning in animals and plants according to the present invention can be applied to a variety of animals and plants as subjects, but the method for feeding or applying the same to animals and plants may vary depending on, for instance, the kinds of subjects to which the feed is applied and therefore, it cannot unconditionally be determined. Accordingly, examples of such methods for feeding or applying the blackening/browning-inhibitory feed, fertilizer or composition for animals and plants according to the present invention include, but are not restricted to, those listed below. For instance, in case of animal bodies, the blackening/ browning-inhibitory feed of the invention may be administered to animals through the oral route; the composition is incorporated into a feed therefor and then the resulting blend is fed to the animals; the feed or the like in the form of, for instance, a variety of tablets, capsules or powders may orally be administered to the animals; the feed or the like in the form of, for instance, a variety of injections, suppositories, liquid preparations for external use and ointments can be administered to the animals through the parenteral rout; and, in particular, when it is applied to fishes and shellfishes, the feed or the like may be blended with the aqueous environment for breeding the same to thus ensure the ingestion. Moreover, in case of plant bodies, the blackening/browning-inhibitory agent for animals and plants according to the present invention may be applied to a plant in the form of a fertilizer by blending the fertilizer with the soil for cultivation or the foregoing composition may be admixed with the soil through injection as a nutrient. Moreover, the fertilizer of the invention may directly be applied to a plant through injection, coating or spraying. In addition, in case of water culture, the fertilizer may be incorporated into the culture medium for water culture or a part of plant body such as flower or fruit is cut off and then the fertilizer is applied to the plant body through absorption. This method can efficiently be applied to cut flowers. Thus, the purpose of the method for the application of the product of the present invention is to preliminarily let the plant body as a subject absorb the pentacyclic triterpenes and physiologically acceptable salts thereof or derivatives thereof according to the present invention while the plant is alive and to thus control or inhibit any blackening and/or browning in the subject.

The subject to which the product of the present invention is administered or applied is an animal or plant body and therefore, the dose thereof to be administered or applied may vary depending on the kind and size of the subject. For instance, when directly administering the feed of the invention comprising an effective component in the form of an extract derived from, for instance, defatted products generated in the olive oil-production processes to an animal, the content of the extract to be incorporated into the feed preferably ranges from 0.0001 to 50% by mass, more preferably 0.001 to 20% by mass, further preferably 0.005 to 10% by mass, still further preferably 0.01 to 5% by mass,

particularly preferably 0.05 to 4% by mass and most preferably 0.1 to 3% by mass.

In the present invention, the term "antioxidant" means a substance capable of preventing any change in quality of foods due to the oxidation phenomenon and preferably a substance capable of controlling or preventing any blackening and/or browning of foods through oxidation. The antioxidants usable in the present invention are not restricted to specific ones insofar as they are used in the usual foods and beverages as well as feeds. However, specific examples thereof preferably used herein are vitamin C, derivatives thereof and salts thereof; tocopherol, tocotrienol and derivatives thereof; dibutyl hydroxy toluene, butyl hydroxy anisole, disodium salt of ethylenediaminetetraacetic acid and calcium disodium salt of ethylenediamine-tetra- acetic acid; tannins such as gallic acid and ellagic acid and derivatives thereof; sulfuric acid type compounds such as sodium sulfite, sodium hyposulfite and sulfur dioxide; γ-oryzanol, rutin and derivatives thereof; lignans such as sesamolin and sesamol; carotenoids such as β -carotene and derivatives thereof; flavonoids such as flavone, catechin, quercetin, isoquercetin, leuco-anthocyanidin, genistin, genistein, 6"-O-acetyl genistin, 6"-O-malonyl genistin, daidzin, daidzein, 6"-O-acetyl daidzin, 6"-O-malonyl daidzin, glycitin, glycitein, 6"-O-acetyl glycitin, 6"-O-malonyl glycitin, puerarin, quercetin, kaempferol and miroestrol; quinones such as ubiquinone and vitamin K; enzymes such as superoxide dismutase, catalase and glutathione peroxidase; oil meals (or seed meals) such as mallow flower extract, Aspergillus terreus extract, licorice oil-extract, clove (Globe) extract, guaiac resin, green coffee bean extract, rice bran extract, canna extract, sage extract, dropwort extract, Tempeh extract, rape seed oil extract, pimenta extract, blueberry extract, propolis extract, pepper extract, Melaleuca essence, eucalyptus extract, gentiana extract, buckwheat extract; adzuki extract, rosemary extract, olive meal extract and soybean meal extract; soybean germ extract; thiamines and salts thereof; riboflavins such as riboflavin and riboflavin acetate; pyridoxines such as pyridoxine hydrochloride and pyridoxine dioctanoate; nicotinic acids such as nicotinic acid amide and nicotinic acid benzyl; bilirubin, mannitol, tryptophane, histidine and nordihydro-guaiaretic acid.

Examples of organic acids and salts thereof used in the present invention are citric acid and salts thereof, succinic acid and salts thereof, lactic acid and salts thereof and tartaric acid and salts thereof.

Examples of phosphoric acid and salts thereof are phosphoric acid, sodium dihydrogen phosphate, disodium hydrogen phosphate, tri-sodium phosphate, potassium dihydrogen phosphate, dipotassium hydrogen phosphate and tri-potassium phosphate.

The foregoing every component can appropriately be designed and incorporated into the foregoing feed while taking into consideration the purposes of the resulting feed. In other words, the feed can appropriately be designed such that it can synergistically or complementarily show a melanogenesis-inhibitory effect or a blackening- or browning-inhibitory effect or such that it is in a favorable condition from the viewpoint of the manner of use thereof, while appropriately changing or combining absorbing ability and the kinds of functions and effects. In addition, isoflavones and derivatives thereof are, for instance, excellent in water-solubility. Thus, when they are used in living bodies simultaneous with the pentacyclic triterpenes used in the invention, which are in general oil-soluble substances, it would be expected that the resulting effect is synergistic, since they simultaneously show their effects including tyrosinase-inhibitory effect, through a variety of metabolic pathways, which may be mediated by water and lipids. Further, it would be expected that in, for instance, the melanogenesis-inhibitory agent for animal and plants, feed or fertilizer simultaneously comprising the pentacyclic triterpenes of the invention and iso-flavonoid, physiological activities of iso-flavonoid such as resistance to oxidation and estrogen-like actions be synergistically and simultaneously activated.

In this respect, the content of the at least one member selected from the group consisting of pentacyclic triterpenes and physiologically acceptable salts thereof or derivatives thereof in the blackening/browning-inhibitory composition of the present invention may appropriately be adjusted while taking into consideration the kinds of pentacyclic triterpenes included in the composition, the manner of the use thereof, the purposes of the use thereof, the amount thereof used, the frequency of the use thereof and the degree of melanogenesis and therefore the content thereof cannot unconditionally be determined. However, the content is, for instance, but is not limited to, not less than 0.00001% by mass, preferably 0.00001 to 99.99% by mass, more preferably 0.0001 to 99.99% by mass, further preferably 0.0005 to 99.99% by mass, still further preferably 0.001 to 99.99% by mass, further preferably 0.005 to 99.99% by mass, further preferably 0.01 to 99.99% by mass, further preferably 0.05 to 99.99% by mass, further preferably 0.1 to 99.99% by mass, further preferably, 0.5 to 99.99% by mass and further preferably 1 to 99.99% by mass. Similarly, the content of the at least one member selected from the group consisting of antioxidants, organic acids and salts thereof and phosphoric acid and salts thereof in the blackening/browning-inhibitory composition of the present invention may appropriately be adjusted while taking into consideration the kinds of, for instance, antioxidants included in the composition, the manner of the use thereof, the purposes of the use thereof, the amount thereof used, the frequency of the use thereof and the degree of melanogenesis and therefore the content thereof cannot unconditionally be determined. However, the content is, for instance, but is not limited to, in the range of from 0.0001 to 95% by mass, preferably 0.001 to 90% by mass, more preferably 0.01 to 80% by mass, further preferably 0.05 to 70% by mass, still further preferably 0.1 to 60% by mass and further preferably 0.5 to 50% by mass. Moreover, the ratio of the amount of the at least one member selected from the group consisting of pentacyclic triterpenes and physiologically acceptable salts thereof or derivatives thereof to that of the at least one member selected from the group consisting of antioxidants,

organic acids and salts thereof and phosphoric acid and salts thereof in the composition may appropriately be adjusted while taking into consideration the kinds of antioxidants, organic acids and salts thereof and phosphoric acid and salts thereof to be selected, the desired synergistic effects, the manner of using the composition, the purposes of using the composition, the amount thereof used, the frequency of the use thereof and the degree of melanogenesis and it cannot unconditionally be determined. However, the relative quantity of the at least one member selected from the group consisting of antioxidants, organic acids and salts thereof and phosphoric acid and salts thereof is, for instance, but is not limited to, the range of from 0.001 to 1000, preferably 0.005 to 500, more preferably 0.01 to 100, further preferably 0.05 to 50 and particularly preferably 0.1 to 20, while the mass of the at least one member selected from the group consisting of pentacyclic triterpenes and physiologically acceptable salts thereof or derivatives thereof included in the composition is assumed to be 1. If the ratio is less than the lower limit specified above, there is observed almost no synergistic effect in the blackening/browning-inhibitory effect, while if it exceeds the upper limit specified above, there is not observed any further improvement of the desired effect in proportion to the added amount thereof and the use thereof in such an amount is disadvantageous from the economical standpoint.

The subjects to which the blackening/browning-inhibitory composition is applied in order to control or prevent the occurrence of any blackening and/or browning may be, for instance, animal and plant bodies and/or a part thereof and/or foods prepared from a part thereof as raw materials and specific examples of such subjects include fishery products (fishes and shellfishes) such as tunas, salmons, trouts and red sea breams; crustaceans such as shrimps, crabs and krills; mollusks such as octopuses and cuttlefishes; shellfishes such as scallops, abalones and ark shells; processed marine products such as fish meat sausage, boiled fish paste, Chikuwa (a kind of fish meat paste), salted fishes and dried fishes; processed livestock products such as livestock meat, ham and sausage; vegetables such as carrot, green pepper, lettuce, cabbage, lotus root, burdock and eggplant; perishable and processed products of vegetables and cereals such as cut vegetables, dried gourd shavings, konjak powder, processed potato products, sweetened adzuki beans and boiled beans; seaweeds; fungi such as mushrooms; fruits such as apples, peaches, grapes, oranges and bananas; perishable and processed products of fruits such as cut fruits, dried fruits, fruit juices and fruit wines.

Moreover, it is herein intended that the animal and plant bodies, to which the melanogenesis-inhibitory agent for animals and plants according to the invention is administered or applied, also include those other than edible ones such as animals and plants for petting or admiration or those used as the interior. Specific examples thereof include mammals such as dogs, cats and hamsters; reptiles such as turtles, tortoises, snakes, lizards, crocodiles and alligators; birds such as budgerigars and parrots; amphibians such as frogs and newts; crustaceans such as shrimps and crabs; fishes such as butterfly fishes, colored carps and wakin goldfishes; aquatic invertebrates represented by shellfishes, sea anemones and soft corals; aquatic plants such as water grasses; submerged plants; flowering plants; turfs; foliage plants; trees; and plant bodies used for admiration.

As has been described above, the blackening/browning-inhibitory composition according to the present invention is used for controlling or preventing any blackening and/or browning in, for instance, perishable foods, processed foods and animals and plants for petting and/or admiration, but the manner of the use thereof may vary depending on the kinds of subjects and cannot unconditionally be determined. Therefore, the methods for using the blackening/browning-inhibitory composition according to the present invention are, for instance, those listed below, but the present invention is not restricted to these specific ones at all. For instance, in case of animal bodies having living activities, the blackening/browning-inhibitory composition of the invention is incorporated into a feed for the animals and they are bred with the resulting feed or the composition may be administered to the animal bodies in the form of, for instance, a variety of tablets, capsules or powders through the oral route or in the form of, for instance, various kinds of injections, suppositories, liquids for external use or ointments through the parenteral route. In particular, when applying the agent to fishes and shellfishes, the agent may be admixed with the aqueous environment for raising the same to thus bring the agent into contact with the fishes and shellfishes. In other words, the purposes of the foregoing methods are to preliminarily let the animal bodies as subjects absorb the pentacyclic triterpenes and physiologically acceptable salts thereof or derivatives thereof while the animals are still alive and to thus control or inhibit any blackening and/or browning in the subject. Alternatively, in case of, for instance, animal bodies whose living activities are terminated or foods consisting of or comprising the same, the blackening/browning-inhibitory composition of the invention may directly be added, applied to these foods or sprayed thereon, or a solution containing the composition is sprayed on the foods or the latter may be immersed in the solution. Further, in case of, for instance, plant bodies in raising, the blackening/browning-inhibitory composition of the invention can be applied thereto in the form of, for instance, a fertilizer or a nutrient or through absorption, or the composition or solution may directly be injected into the plant bodies through, for instance, injection or it may be applied to the plant bodies through, for instance, coating and spraying. In this case, the purposes of the foregoing methods are to preliminarily let the plant bodies as subjects absorb the pentacyclic triterpenes and physiologically acceptable salts thereof or derivatives thereof while the plants are still alive or in raising and to thus control or inhibit any blackening/browning in the subject. Moreover, in case of, for instance, parts of animals and plants, which are usually eaten or processed products thereof, the blackening/browning-inhibitory composition of the

invention can directly be, for instance, added to, applied to or sprayed on these foods or the foods are sprayed with or immersed in a solution of the composition. The effects of the present invention will more clearly be demonstrated in Examples, but the present invention is not limited to such specific Examples at all.

In addition to the foregoing, it would be expected that the blackening/browning- inhibitory composition for animals and plants according to the invention can indirectly control or prevent any blackening and/or browning in, for instance, perishable foods, processed foods and animals and plants for petting and/or admiration as well as human beings. The manner of the use thereof may vary depending on the kinds of subjects and cannot unconditionally be determined. Therefore, the methods for using the blackening/browning-inhibitory composition for animals and plants according to the present invention are, for instance, those listed below, but the present invention is not restricted to these specific ones at all. For instance, in case of an animal body, which is in breeding, the blackening/browning-inhibitory composition for animals and plants according to the present invention is administered thereto through the oral route or through, for instance, injection to thus permit the accumulation of the melanogenesis- inhibitory component in the subject or the animal and then the resulting animal body containing accumulated inhibitory component may be administered to another animal body or human body. Moreover, the blackening/browning-inhibitory composition is incorporated into, for instance, a fertilizer and the resulting fertilizer is then applied to a plant body. Moreover, the blackening/browning-inhibitory composition for animals and plants according to the present invention is applied to plant bodies, which are in breeding, in the form of a fertilizer or a nutrient so that animal bodies, human bodies or other plant bodies can then ingest or absorb the resulting plant body. For instance, if a person ingests the resulting plant, it may be in the form of a food or a beverage. In this case, the food or beverage has a high content of the pentacyclic triterpenes and physiologically acceptable salts thereof or derivatives thereof since the subject or an animal or plant body may absorb these effective blackening/browning-inhibitory components during the growth thereof. For this reason, the melanogenesis in the human body is efficiently controlled or prevented by the ingestion of these food or beverage or a raw material therefor. Similarly, they may be applied to animals and plants in the form of a feed or fertilizer therefor to thus effectively inhibit any blackening and/or browning therein.

In this respect, the blackening/browning-inhibitory composition for animals and plants according to the present invention can be used in the form of a variety of feeds to make the use of its blackening/browning-inhibitory effect. In other words, the present invention relates to a feed containing the blackening/browning-inhibitory composition. Examples of the foregoing feeds include, but are not limited to, those for the domestic animals such as cattle, pigs, horses and rabbits; feeds for domestic fowls such as chickens, turkeys and quails; feeds for marine and limnetic cultivated fishes and marine and limnetic aquarium fishes such as yellowtails, flatfishes, Fugu rubripes, ayu, trouts and salmons, butterfly fishes and wakin goldfishes; feeds for fishes and shellfishes for cultivation, admiration and petting, for instance, crustaceans, amphibians and shellfishes such as shrimps, crabs, abalone, turban shells, snapping turtles, turtles and frogs; pet foods for breeding pet animals such as dogs, cats and monkeys; feeds for insects; feeds used in zoos; and feeds for treating animals. These feeds may have any shape depending on various applications. For instance, they may be in the form of powders, liquids, gels, dry foods, semi-moistened foods, canned foods, tablet-like confectionery and tablets.

Examples of the methods for adding the foregoing effective component to feeds or admixing the former with the latter include, but are not limited to, a method in which the effective component is added to feeds in the form of a feed composition, a method in which the effective component in the form of a powder or a liquid is admixed with a feed or a method for adding and adhering the component to feeds through spraying as well as a method comprising admixing the foregoing feeds with other feeds and a method comprising adding the component to feeds as an additive.

The content of the blackening/browning-inhibitory composition in the feed according to the present invention may vary depending on a variety of factors such as the kinds of pentacyclic triterpenes and antioxidants incorporated into the feed, the manner of using the feed, the purposes of the use thereof, the amount of the feed used, the frequency of the use thereof, and species, sexes, body weights and the degrees of melanogenesis observed for each specific subject and it cannot accordingly unconditionally be determined. The amount thereof is, for instance, but is not limited to, the range of from 0.00001 to 50% by mass, preferably 0.0001 to 30% by mass, more preferably 0.001 to 20% by mass, further preferably 0.01 to 10% by mass and particularly preferably 0.1 to 5% by mass, in case of the direct administration and 0.001 to 30% by mass, preferably 0.01 to 20% by mass and more preferably 0.1 to 10% by mass (in the form of a solution having such a concentration) in case of the indirect administration such as immersion, on the basis of the mass of the subject.

Moreover, the blackening/browning-inhibitory composition according to the present invention can be used in the form of a variety of fertilizers to make the use of its blackening/browning-inhibitory effect. In other words, the present invention relates to a fertilizer containing the blackening/browning-inhibitory composition. The foregoing fertilizer is not restricted to those listed below, but specific examples thereof include those subsequently admixed with the soil, those sprayed on the soil, those applied onto or coated on the surface of leaves, culture mediums for the water culture and tissue culture and those for treating seeds, roots or the like. Examples of the subjects or plants to which the foregoing fertilizer is applied include, but are not limited to, cereals such as rice plants and wheat plants; green vegetables such

as cabbages, lettuces and spinaches; edible roots such as burdock, turnips, Japanese radishes and carrots; fruit vegetables such as tomatoes and strawberry; fruit trees such as apple, pear, grape and peach trees; flowering plants such as pansy and lily; lawn grasses such as Korean lawn grass and bent lawn grass; and plants for admiration such as gum trees, dracaena and maidenhair.

The content of the blackening/browning-inhibitory composition in the fertilizer according to the present invention may vary depending on a variety of factors such as the kinds of pentacyclic triterpenes and antioxidants incorporated into the fertilizer, the manner of using the fertilizer, the purposes of the use thereof, the amount thereof used, the frequency of the use thereof, and species, body weights and the degrees of melanogenesis observed for each specific subject and it cannot accordingly unconditionally be determined. The amount thereof is, for instance, but is not limited to, the range of from 0.0001 to 30% by mass, preferably 0.001 to 20% by mass, more preferably 0.01 to 15% by mass, further preferably 0.1 to 10% by mass and particularly preferably 0.1 to 5% by mass, in case of the fertilizers admixed with or sprayed on the soil and 0.001 to 20% by mass, preferably 0.01 to 10% by mass and more preferably 0.1 to 5% by mass (in the form of a solution having such a concentration) in case of culture mediums, on the basis of the mass of the soil used.

The pentacyclic triterpenes and physiologically acceptable salts thereof or derivatives thereof used in the present invention possess considerably excellent melanogenesis-inhibitory effect and therefore, the application thereof to animals and plants would result in the achievement of quite favorable effect. More specifically, commercial values of substances or products such as animals and plants for petting and admiration, perishable foods and processed foods can considerably be improved by controlling or preventing any blackening and/or browning in these subjects. Further, if the foregoing effective components are used in combination with, for instance, antioxidants, an organic acid and salts thereof, phosphoric acid and salts thereof, the resulting products would show quite excellent synergistic effects and therefore, the use of the foregoing components optionally in combination with additives such as antioxidants, an organic acid and salts thereof, phosphoric acid and salts thereof is quite preferred from the viewpoint of the achievement of excellent effects, the reduction of the amount to be used and the reduction of the cost required, as compared with the conventional techniques in which the additives are used alone.

**Examples**

Example of the present invention will hereunder be described, but the present invention is not limited to these Examples. In the following description, the term "% by mass" will also simply be referred to as "%".

Regarding the pentacyclic triterpenes used in Examples, erythrodiol (Funakoshi Co., Ltd.), ursolic acid (Wako Pure Chemical Co., Ltd.), uvaol (Funakoshi Co., Ltd.), betulinic acid (Funakoshi Co., Ltd.) and betulin (Funakoshi Co., Ltd.) were purchased from the manufacturers as reagents. In this respect, those of HPLC grade were used without any further treatment, while the remaining triterpenes were dissolved in ethanol heated to its boiling point till the resulting solution was saturated, followed by recrystallization through cooling, filtration and drying prior to the practical use thereof. As will be detailed in the following Examples, maslinic acid used herein was extracted from olive plants and then purified. The purity of the product was confirmed to be 95%, prior to use.

<u>Preparation Example 1</u>

Dried fruits (including seeds; 500 g) of native olive (Olea europaea L.) were crushed and 3 L of hexane was added to the crushed fruits to carry out extraction thereof for 3 hours. The foregoing operations were repeated 4 times to obtain defatted fruits, the seeds were removed therefrom, then the resulting product was pulverized and the pulverized product was again extracted with 5 volumes of hexane for 3 hours to thus give 229 g of defatted product from which the oil component were completely removed. To the defatted product, there was added 10 volumes of water-containing ethanol having an ethanol content of 60% by mass, followed by the extraction at room temperature for 3 hours with vigorous stirring. The whole of the extraction system was filtered and the resulting filtrate was concentrated to dryness to give 112.7 g of an extracted product.

To 100 g of this extracted product, there was added 2 L of water and the resulting mixture was vigorously stirred at room temperature for one hour. The whole of the mixture was centrifuged, the resulting supernatant was removed through decantation and the resulting precipitates were dried to give 10.0 g of a concentrate.

Then the concentrate was fractionated by silica gel column chrom atography using a column packed with about 40 volumes (400 g) of silica gel. After the preliminary elution of various kinds of unnecessary components using, as an elute, a 3:1 hexane-ethyl acetate mixed solvent in a volume of 10 times (4000 mL) that of the packed silica gel, various kinds of unnecessary components were then eluted using an elute or 2.5 volumes (1000 mL) of a 1:1 hexane-ethyl acetate mixed solvent. Subsequently, the desired maslinic acid was eluted with an elute or a 1:1 hexane-ethyl acetate mixed solvent in a volume of 10 times (4000 mL) that of the packed silica gel to give a crude maslinic acid-containing fraction. The hexane and ethyl acetate were removed from the resulting fraction, followed by drying in a

vacuum to give 1.96 g of a crude maslinic acid-containing fractionated product.

Further, the crude maslinic acid-containing fractionated product was purified by ODS column chromatography using a column packed with about 30 volumes (60 g) of octadecyl silica gel. First, various kinds of unnecessary components were eluted with an elute or an 8:2 methanol-water mixed solvent in a volume of 10 times (600 mL) that of the packed silica gel. Then the desired maslinic acid was eluted with an elute or an 8:2 methanol-water mixed solvent in a volume of 30 times (1800 mL) that of the packed silica gel to thus give a purified maslinic acid-containing fraction. After the removal of the methanol from the resulting fraction, followed by drying in a vacuum to give 1.51 g of purified maslinic acid 1.

The purified maslinic acid 1 was analyzed by, for instance, NMR and MS spectroscopy and as a result, it was confirmed that a part of the purified maslinic acid 1 was in the form of sodium and potassium salts and the remaining majority thereof was in the free acid state. Moreover, the purity thereof was determined according to the GC technique and as a result, it was confirmed that the purity thereof for maslinic acid was not less than 95%.

Preparation Example 2

Olive plants (Olea europaea L.) of Italy growth were subjected to oil expression to give 1 kg of an oil expression residue, 10 volumes of water-containing ethanol having an ethanol content of 65% by mass were added to the residue and the latter was extracted at room temperature with vigorous stirring over 3 hours. The whole of the extraction system was filtered and the resulting filtrate was concentrated to dryness to give 20.2 g of an extracted product.

To this extracted product, there were added 1 L of n-butanol and 1 L of water and the resulting mixture was stirred for 10 minutes followed by separating the mixture into an n-butanol phase and an aqueous phase. The n-butanol was removed from the n-butanol phase, followed by drying in a vacuum to give 13.3 g of a concentrate.

Then the concentrate was fractionated by silica gel column chromatography using a column packed with about 40 volumes (500 g) of silica gel. More specifically, after the preliminary elution of various kinds of unnecessary components using, as an elute, a 3:1 hexane-ethyl acetate mixed solvent in a volume of 10 times (5000 mL) that of the packed silica gel, various kinds of unnecessary components were then eluted using an elute or 2.5 volumes (1250 mL) of a 1:1 hexane-ethyl acetate mixed solvent. Subsequently, the desired maslinic acid was eluted with an elute or a 1:1 hexane-ethyl acetate mixed solvent in a volume of 10 times (5000 mL) that of the packed silica gel to give a crude maslinic acid-containing fraction. The hexane and ethyl acetate were removed from the resulting fraction, followed by drying in a vacuum to give 2.66 g of a crude maslinic acid-containing fractionated product.

Further, this crude maslinic acid-containing fractionated product was purified by ODS column chromatography using a column packed with about 30 volumes (80 g) of octadecyl-modified silica gel. First, various kinds of unnecessary components were eluted with an elute or an 8:2 methanol-water mixed solvent in a volume of 10 times (800 mL) that of the packed gel. Then the desired maslinic acid was eluted with an elute or an 8:2 methanol-water mixed solvent in a volume of 30 times (2400 mL) that of the packed silica gel to thus give a purified maslinic acid-containing fraction. After the removal of the methanol from the resulting fraction, the residue was dried in a vacuum to give 2.06 g of purified maslinic acid 2.

The purified maslinic acid 2 was analyzed by, for instance, NMR and MS spectroscopy and as a result, it was confirmed that a part of the purified maslinic acid 2 was in the free acid state and the remaining majority thereof was in the form of salts such as sodium and potassium salts. Moreover, the purified maslinic acid 2 was inspected for the purity thereof by the GC technique and it was confirmed that the purity thereof for maslinic acid was not less than 97%.

Preparation Example 3

To 1 kg of extraction residue (a defatted product obtained by further treating an oil expression residue in an extraction process) derived from olive of Italy growth generated in the olive oil production processes, there was added 10 volumes of ethanol, followed by heating the mixture at 55°C with vigorous stirring to carry out extraction over 3 hours. The whole of the extraction system was filtered and then the resulting filtrate was concentrated to dryness to give 35 g of an extracted product.

Then the extracted product was subjected to silica gel column chromatography using a column packed with about 40 volumes (1400 g) of silica gel. First, various kinds of unnecessary components were eluted with an elute or a 3:1 hexane-ethyl acetate mixed solvent in a volume of about 10 times (14 L) that of the packed silica gel, various kinds of unnecessary components were further eluted with an elute or a 1:1 hexane-ethyl acetate mixed solvent in a volume of about 2.5 times (3500 mL) that of the packed silica gel and then the desired maslinic acid was eluted with an elute or a 1:1 hexane-ethyl acetate mixed solvent in a volume of 10 times (14 L) that of the packed silica gel to thus give a crude maslinic acid fraction. The hexane and ethyl acetate were removed from this fraction and then the resulting residue was dried in a vacuum to give 5.90 g of a crude maslinic acid-containing fractionated product.

This crude maslinic acid-containing fractionated product was purified by ODS column chromatography using

a column packed with about 30 volumes (180 g) of octadecyl-modified silica gel. First, various kinds of unnecessary components were eluted with an elute or an 8:2 methanol-water mixed solvent in a volume of about 10 times (1800 mL) that of the packed silica gel. Thereafter, the desired maslinic acid was eluted with an elute or an 8:2 methanol-water mixed solvent in a volume of 30 times (5400 mL) that of the packed silica gel to thus give a purified maslinic acid fraction. The methanol and water were removed from this fraction and the resulting residue was dried in a vacuum to give 5.36 g of purified maslinic acid 3.

The purified maslinic acid 3 was analyzed by, for instance, NMR and MS spectroscopy and as a result, it was confirmed that a part of the purified maslinic acid 3 was in the form of sodium and potassium salts and the remaining majority thereof was in the free acid state. Moreover, the purity thereof was determined according to the GC technique and as a result, it was confirmed that the purity thereof for maslinic acid was not less than 97%.

Derivatives of pentacyclic triterpenes were prepared as follows:

Synthesis 1: Ethyl Ester of Maslinic Acid

Maslinic acid (4.5 g) and triethylamine (1.0 g) were dissolved in 50 mL of chloroform and then a solution of thionyl chloride (1.1 g) in 10 mL of chloroform was dropwise added to the resulting solution with ice cooling and stirring over one hour. Then 3.2 g of ethanol was added to the mixture and a solution of triethylamine (1.0 g) in 10 mL of chloroform was dropwise added to the mixture with ice cooling and stirring over three hours. After the completion of the reaction, the fraction soluble in chloroform was isolated, followed by distillation of the chloroform to thus give a crude reaction product and purification thereof through silica gel column chromatography to give 3.5 g of ethyl maslinate.

Synthesis 2: 2,3-O-Di-Acetyl-Maslinic Acid

Maslinic acid (2.0 g) was dissolved in 100 mL of pyridine, 50 mL of acetic acid anhydride was added to the solution and the mixture was stirred overnight. After the pyridine and acetic acid anhydride were distilled off, the resulting residue was dissolved in ether, the resulting ether phase was washed once with a 1N hydrochloric acid aqueous solution, once with a saturated sodium hydrogen carbonate solution and 3 times with pure water, followed by the addition of magnesium sulfate and allowing to stand overnight. The magnesium sulfate was removed through filtration, the ether was distilled off to give a crude product and the latter was purified by silica gel column chromatography to thus give 2.2 g of 2,3-O-di-acetyl-maslinic acid.

Synthesis 3: Triethylsilyl Ester of 2,3-O-Di-Triethylsilyl-Maslinic Acid

Maslinic acid (1.0 g) was dissolved in 200 mL of anhydrous dimethylformamide, 144.0 mg of imidazole and 350 μL of triethylsilyl chloride were added to the resulting solution at 0°C, the mixture was sealed with a cap and stirred for 2 hours. After the dimethylformamide was distilled off, the resulting residue was dissolved in ether, the ether phase was washed once with a 1N hydrochloric acid aqueous solution, once with a saturated sodium hydrogen carbonate solution and 3 times with pure water, followed by the addition of magnesium sulfate and allowing to stand overnight. The magnesium sulfate was removed through filtration, the ether was distilled off to give a crude product and the latter was purified by silica gel column chromatography to thus give 1.5 g of triethylsilyl ester of 2,3-O-di-triethylsilyl-maslinic acid.

Synthesis 4: Ethyl 2,3-O-Di-Stearoyl-Maslinate

The ethyl maslinate (1.0 g) prepared in Synthesis 1 was dissolved in 50 mL of anhydrous toluene, 5.0 g of triethylamine was added to the resulting solution, 6.0 g of stearic acid chloride was gradually added to the mixture with ice cooling and stirring for one hour and the resulting mixture was stirred over 9 hours while the temperature thereof was gradually reduced to room temperature. To the mixture, there was added a proper amount of a 1N hydrochloric acid aqueous solution, the resulting mixture was extracted with ether, the resulting ether phase was washed once with a saturated sodium hydrogen carbonate solution and three times with pure water, followed by the addition of magnesium sulfate and allowing the mixture to stand overnight. The magnesium sulfate was removed through filtration, the ether was distilled off to give a crude product and the latter was purified by silica gel column chromatography to thus give 1.2 g of ethyl 2,3-O-di-stearoyl-maslinate.

Synthesis 5: 3,28-O-Di-Acetyl-Erythrodiol

Erythrodiol (5.0 g) was dissolved in 250 mL of pyridine, 100 mL of acetic anhydride was added to the resulting solution and the mixture was allowed to stand overnight. After the pyridine and acetic anhydride were distilled off, the

resulting residue was dissolved in ether, the resulting ether phase was washed once with a 1N hydrochloric acid aqueous solution, once with a saturated sodium hydrogen carbonate solution and 3 times with pure water, followed by the addition of magnesium sulfate and allowing the mixture to stand overnight. The magnesium sulfate was removed through filtration, the ether was distilled off to give a crude product and the latter was purified by silica gel column chromatography to thus give 5.4 g of 3,28-O-di-acetyl- erythrodiol.

Synthesis 6: Ethyl Ursolate

Ursolic acid (5.0 g) and triethylamine (1.1 g) were dissolved in 50 mL of chloroform and a solution of thionyl chloride (1.2 g) in 10 mL of chloroform was dropwise added to the resulting solution with ice cooling and stirring for one hour. Then 3.5 g of ethanol was added to the resulting mixture and a solution of triethylamine (1.1 g) in 10 mL of chloroform was dropwise added to the mixture with ice cooling and stirring for 3 hours. After the completion of the reaction, the chloroform-soluble fraction was separated from the mixture, the chloroform was distilled off to give a crude reaction product and the latter was purified by silica gel chromatography to thus give 3.8 g of ethyl ursolate.

Synthesis 7: 3,28-O-Di-Acetyl-Uvaol

Uvaol (5.0 g) was dissolved in 250 mL of pyridine, 100 mL of acetic anhydride was added to the resulting solution and the mixture was stirred overnight. After the pyridine and acetic anhydride were distilled off, the resulting residue was dissolved in ether, the ether phase was washed once with a 1N hydrochloric acid aqueous solution, once with a saturated sodium hydrogen carbonate solution and 3 times with pure water, followed by the addition of magnesium sulfate and allowing the mixture to stand overnight. The magnesium sulfate was removed through filtration, the ether was distilled off to give a crude product and the latter was purified by silica gel column chromatography to thus give 5.4 g of 3,28-O-di-acetyl-uvaol.

Synthesis 8: Ethyl Betulinate

Betulinic acid (5.0 g) and triethylamine (1.1 g) were dissolved in 50 mL of chloroform and a solution of thionyl chloride (1.2 g) in chloroform (10 mL) was dropwise added to the resulting solution with ice cooling and stirring for one hour. Then 3.5 g of ethanol was added to the mixture and a solution of triethylamine (1.1 g) in 10 mL of chloroform was dropwise added to the mixture with ice cooling and stirring over 3 hours. After the completion of the reaction, the chloroform-soluble fraction was isolated, the chloroform was distilled off to give a crude reaction product and the latter was purified by silica gel chromatography to thus give 3.8 g of ethyl betulinate.

Synthesis 9: 3,28-O-Di-Acetyl-Betulin

Betulin (5.0 g) was dissolved in 250 mL of pyridine, 100 mL of acetic anhydride was added to the resulting solution and the mixture was allowed to stand overnight. After the pyridine and acetic anhydride were distilled off, the resulting residue was dissolved in ether, the resulting ether phase was washed once with a 1N hydrochloric acid aqueous solution, once with a saturated sodium hydrogen carbonate solution and 3 times with pure water, followed by the addition of magnesium sulfate and allowing the mixture to stand overnight. The magnesium sulfate was removed through filtration, the ether was distilled off to give a crude product and the latter was purified by silica gel column chromatography to thus give 5.4 g of 3,28-O-di-acetyl-betulin.

Example 1: Evaluation of Melanin Production-Inhibitory Effect

A culture medium was dispensed to wells of a 6-well plate (2 mL/well each), followed by inoculation of a desired amount of B-16 melanoma cells on each well, allowing the wells to stand at 37°C and 5% $CO_2$ to thus cultivate the cells. On the day subsequent thereto, a candidate sample (pentacyclic triterpenes) solution prepared was added to and mixed with the culture medium containing the cells and the cultivation was continued. The culture medium was replaced with fresh one on the $5^{th}$ day from the initiation of the cultivation and the prepared sample solution was again added to the wells. On the next day, the culture medium was removed to recover the cells, followed by the washing of these cells with PBS (phosphate buffered physiological saline) and the subsequent evaluation of the cell-whitening degree. In this respect, the melanogenesis-inhibitory function was evaluated by comparing the cell-whitening degree thus obtained with that observed when using 450 ppm of vitamin C-magnesium phosphate as a known whitening agent (a positive control) and that obtained when any candidate sample was not used (control), according to the following evaluation criteria.

The evaluation criteria for the cell-whitening degree are as follows:

| (Evaluation Criteria) | |
|---|---|
| Evaluation | Details |
| ++ | The whitening degree is higher than that observed for the positive control. |
| + | The whitening degree is almost identical to that observed for the positive control. |
| ± | The whitening degree is not higher than that observed for the positive control, but higher than that observed for the control. |
| - | The whitening degree is almost identical to that observed for the control. |

Various pentacyclic triterpenes were inspected and evaluated for the melanogenesis-inhibitory function according to the foregoing method. The results thus obtained are summarized in the following Table 1.

Table 1:

| Results Obtained in the Evaluation of Melanin Production-Inhibitory Effect | | | | | | | | |
|---|---|---|---|---|---|---|---|---|
| **Present Invention** | | | | | | | | |
| Test Sample | Concentration (ppm) | | | | | | | |
| | 2 | 4 | 6 | 8 | 10 | 15 | 25 | 50 |
| Purified maslinic acid 1 | ± | + | ++ | ++ | ++ | | | |
| Purified maslinic acid 2 | ± | + | ++ | ++ | ++ | | | |
| Erythrodiol | ± | | ± | | ± | | + | + |
| Ursolic acid | ± | + | ++ | ++ | ++ | | | |
| Uvaol | - | | - | | + | | + | + |
| Betulinic acid | - | | ± | | + | | + | + |
| Betulin | - | | ± | | ± | | + | + |
| Compound of Synthesis 1 | ± | + | ++ | ++ | ++ | | | |
| Compound of Synthesis 2 | ± | ± | + | ++ | ++ | ++ | | |
| Compound of Synthesis 3 | - | | ± | | + | | + | + |
| Compound of Synthesis 4 | ± | ± | + | ++ | ++ | ++ | | |
| Compound of Synthesis 5 | - | | ± | | ± | | + | + |
| Compound of Synthesis 6 | ± | + | ++ | ++ | ++ | | | |
| Compound of Synthesis 7 | - | | - | | ± | | + | + |
| Compound of Synthesis 8 | - | | ± | | ± | | + | + |
| Compound of Synthesis 9 | - | | - | | ± | | ± | + |
| Comparative Example | | | | | | | | |
| Test Sample | Concentration (ppm) | | | | | | | |
| | 10 | 15 | 25 | 50 | 100 | 200 | 300 | 450 |
| Kojic Acid | - | - | - | ± | ± | + | ++ | ++ |

Regarding the results listed in Table 1, the whitening degree observed when adding 450 ppm of vitamin C-magnesium phosphate is selected as a standard.

The results listed in Table 1 indicate that, when comparing the melanogenesis-inhibitory functions of the pentacyclic triterpenes and physiologically acceptable salts thereof or derivatives thereof with that observed for the positive control or 450 ppm of vitamin C-magnesium phosphate, all of the former possess the melanogenesis-inhibitory functions several ten times to several hundred times that observed for vitamin C-magnesium phosphate. For instance, it

was found that when comparing the function observed for free maslinic acid (purified maslinic acid 1) with that observed for 450 ppm of vitamin C-magnesium phosphate, the concentration of the former required for showing the effect identical to that observed for 450 ppm of vitamin C-magnesium phosphate was only 4 ppm and therefore, the free maslinic acid (purified maslinic acid 1) had a melanogenesis-inhibitory function of about 110 times that observed for vitamin C-magnesium phosphate. Similarly, it was found that the melanogenesis-inhibitory function was about 110 times, for a maslinic acid salt (purified maslinic acid 2), about 20 times, for erythrodiol, about 110 times, for ursolic acid, about 40 times, for uvaol, about 40 times, for betulinic acid, about 20 times, for betulin, about 110 times, for ethyl maslinate, about 75 times, for acetylated maslinic acid, about 40 times, for triethylsilyl-modified maslinic acid, about 75 times, for ethyl ester of stearoyl-modified maslinic acid, about 20 times, for acetyl-modified erythrodiol, about 110 times, for ethyl ursolate, about 20 times, for acetyl-modified uvaol, about 20 times, for ethyl betulinate, and about 10 times, for acetyl-modified betulin, that observed when 450 ppm of vitamin C-magnesium phosphate (standard) is added.

The results listed in Table 1 also indicate that the pentacyclic triterpenes and physiologically acceptable salts thereof or derivatives thereof possess excellent melanogenesis-inhibitory effects as compared with that observed for kojic acid, which has long been used widely.

From the foregoing, it is found that the pentacyclic triterpenes and physiologically acceptable salts thereof or derivatives thereof have remarkable melanogenesis-inhibitory effects or such effects several ten times to several hundred times that observed for vitamin C-magnesium phosphate, which has widely been used as an existing melanogenesis-inhibitory agent for animals and plants. This clearly indicates that the present invention can provide a melanogenesis-inhibitory agent for animals and plants having an excellent effect, which has never been achieved.

Example 2

In this Example, feeds detailed in the following Table 2 were prepared. More specifically, each feed was prepared by admixing, in order, the components shown in Table 2, kneading together using a proper amount of water, forming the resulting mixture into pellets and then suction drying the pellets.

Table 2

| Feed | A* | B* | C* | A | B | C |
|---|---|---|---|---|---|---|
| Fish meal | 60 | 60 | 60 | 60 | 60 | 60 |
| Soybean meal | 10 | 10 | 10 | 10 | 10 | 10 |
| Dextrin | 10.0 | 9.9 | 9.999 | 9.9 | 9.999 | 9.9 |
| Fish oil | 7 | 7 | 7 | 7 | 7 | 7 |
| Soybean oil | 3 | 3 | 3 | 3 | 3 | 3 |
| Corn starch | 3.5 | 3.5 | 3.5 | 3.5 | 3.5 | 3.5 |
| Mineral mixture | 4.5 | 4.5 | 4.5 | 4.5 | 4.5 | 4.5 |
| Vitamin mixture | 2 | 2 | 2 | 2 | 2 | 2 |
| Kojic acid | -- | 0.1 | 0.001 | -- | -- | -- |
| Maslinic acid | | | | 0.1 | 0.001 | |
| Ursolic acid | | | | | | 0.1 |
| Total amount | 100 | 100 | 100 | 100 | 100 | 100 |

Table 2 (continued)

| Feed | D* | E* | D | F* | G* |
|---|---|---|---|---|---|
| Fish meal | 60 | 60 | 60 | 60 | 60 |
| Soybean meal | 10 | 10 | 10 | 10 | 10 |
| Dextrin | 9.85 | 9.75 | 9.84 | 9.95 | 9.85 |
| Fish oil | 7 | 7 | 7 | 7 | 7 |
| Soybean oil | 3 | 3 | 3 | 3 | 3 |
| Corn starch | 3.5 | 3.5 | 3.5 | 3.5 | 3.5 |
| Mineral mixture | 4.5 | 4.5 | 4.5 | 4.5 | 4.5 |
| Vitamin mixture | 2 | 2 | 2 | 2 | 2 |
| Kojic acid | -- | 0.1 | -- | -- | 0.1 |
| Maslinic acid | -- | -- | 0.01 | -- | -- |
| Vitamin E | 0.05 | 0.05 | 0.05 | -- | -- |
| Vitamin C | 0.10 | 0.10 | 0.10 | -- | -- |
| Astaxanthin | -- | -- | -- | 0.05 | 0.05 |
| Total amount | 100 | 100 | 100 | 100 | 100 |

Table 2 (continued)

| Feed | E | R | S | T | U | V |
|---|---|---|---|---|---|---|
| Fish meal | 60 | 70 | -- | 60 | 60 | 60 |
| Soybean meal | 10 | -- | 70 | 10 | 10 | 10 |
| Defatted meal of olive in Preparation Ex. 1 | -- | -- | -- | -- | -- | 10.0 |
| Dextrin | 9.94 | 9.99 | 9.99 | 9.99 | 9.9999 | -- |
| Fish oil | 7 | 7 | 7 | 7 | 7 | 7 |
| Soybean oil | 3 | 3 | 3 | 3 | 3 | 3 |
| Corn starch | 3.5 | 3.5 | 3.5 | 3.5 | 3.5 | 3.5 |
| Mineral mixture | 4.5 | 4.5 | 4.5 | 4.5 | 4.5 | 4.5 |
| Vitamin mixture | 2 | 2 | 2 | 2 | 2 | 2 |
| Maslinic acid | 0.01 | 0.01 | 0.01 | 0.01 | 0.0001 | -- |
| Astaxanthin | 0.05 | -- | -- | -- | -- | -- |
| Total amount | 100 | 100 | 100 | 100 | 100 | 100 |

Table 2 (continued)

| Feed | W | X | Y | Z | Z* |
|---|---|---|---|---|---|
| Fish meal | 60 | 60 | 60 | 60 | 60 |
| Soybean meal | 10 | 10 | 10 | 10 | 10 |
| Dextrin | 9.5 | 9.95 | 9.988 | 9.98 | 9.84 |
| Fish oil | 7 | 7 | 7 | 7 | 7 |
| Soybean oil | 3 | 3 | 3 | 3 | 3 |
| Corn starch | 3.5 | 3.5 | 3.5 | 3.5 | 3.5 |
| Mineral mixture | 4.5 | 4.5 | 4.5 | 4.5 | 4.5 |
| Vitamin mixture | 2 | 2 | 2 | 2 | 2 |
| Kojic acid | -- | -- | -- | -- | 0.01 |
| Maslinic acid | -- | -- | -- | 0.01 | -- |
| Vitamin E | -- | -- | -- | -- | 0.05 |
| Vitamin C | -- | -- | -- | -- | 0.10 |
| Extract of Preparation Ex. 1 | 0.5 | -- | -- | -- | -- |
| Concentrate of Preparation Ex. 1 | -- | 0.05 | -- | -- | -- |
| Crude maslinic acid extracted product in Preparation Ex. 2 | -- | -- | 0.012 | -- | -- |
| Genistin | -- | -- | -- | 0.01 | -- |
| Total amount | 100 | 100 | 100 | 100 | 100 |

*: Comparative Example

Example 3

Then, a breeding test of red sea breams was conducted according to the following procedures. Red sea breams (440 fishes) having an average body weight of 220 g were randomly divided into groups each comprising 20 fishes, which were used as test groups. Red sea breams of each group were accommodated in a 500 L black-colored Polycarbonate water tank and the water tanks were disposed in the open air. In this respect, these water tanks were disposed in such a manner that they equally got sunshine and any construction never shaded these water tanks in the sunshine duration or during the daytime. Each water tank was referred to as a test group 1 to 22 and each feed detailed in the foregoing Table 2 was administered to the red sea breams in each test group in an amount of 4% (of the body weight of each fish)/day over 2 months. After the completion of the breeding duration, all of the red sea breams in the test groups 1 to 22 were inspected for the L values as indications of the brightness of the body surfaces thereof using a color difference meter (MINOLTA SPECTROPHOTOMETER CM-508d) and an average value for each test group was calculated. The L value was determined at a measuring point, which was positioned within the area sandwiched between a line connecting the center of the caudal peduncle and the tip of the gill cover and the lateral line and which was equidistant from the pelvic fin and the anus of each fish.

Moreover, regarding all of the red sea breams tested except for those belonging to the groups 10 to 12, three frozen sections having a thickness of 1 mm were cut from each fish along the body surface while centering the L value-measured point, followed by thawing them and putting transparent graph paper on each sample after the sections were almost transparent to thus determine overall length of black lines appearing in an area of 1 $cm^2$. The black lines were in a dendritic pattern and therefore, the lengths of the whole dendritic pattern were determined and summed.

Alternatively, regarding the red sea breams belonging to the groups 10 to 12 were inspected for the L values as the indications of the brightness and the a values as the indication for redness at the same position.

Moreover, the fishes in the groups 1 to 22 were visually evaluated. All of the subjects were accommodated in a breeding water tank filled with water up to a depth of 50 cm, the back face of each fish body, which could visually be observed through the surface of the water, was inspected under the same conditions in a room and the blackness of the body surface of each fish was scored. More specifically, all of the fishes bred were classified into 5 groups and graded on the basis of the degree of blackness in which the group consisting of the whitest fishes was graded as 5 and that consisting of the blackest ones was graded as 1. Thereafter, the scores were summed for each test group to determine the average value.

Further, the fishes were likewise evaluated on the basis of the blackening /browning-inhibitory index and the intensity index for blackening/browning-inhibition as indices representing the effect of the present invention. These blackening /browning-inhibitory indexes and intensity indexes for blackening/browning-inhibition were determined according to the equations previously described. The results thus obtained are listed in the following Table 3.

Table 3

| Test group | 1 | 2 | 3 | 4 | 5 | 6 |
|---|---|---|---|---|---|---|
| Feed administered | A* | B* | C* | A | B | C |
| Body color (L value) | 51.8 | 55.9 | 50.9 | 68.7 | 66.9 | 65.1 |
| Body color (a value) | 7.0 | -- | -- | -- | -- | -- |
| Black lines observed in meat | 60.5 | 42.2 | 59.1 | 37.2 | 41.1 | 41.8 |
| Visually evaluated points (av.) | 1.25 | 1.55 | 1.2 | 4.05 | 3.8 | 3.5 |
| Blackening/browning-inhibitory index | 100.0 | 107.9 | 98.3 | 132.6 | 129.2 | 125.7 |
| Intensity index for blackening/browning inhibition | -- | 100.0 | 100.0 | 122.9 | 131.4 | 116.5 |

Table 3 (continued)

| Test group | 7 | 8 | 9 | 10 | 11 |
|---|---|---|---|---|---|
| Feed administered | D* | E* | D | F* | G* |
| Body color (L value) | 53.1 | 58.8 | 78.3 | 50.4 | 55.1 |
| Body color (a value) | -- | -- | -- | 7.2 | 8.8 |
| Black lines observed in meat | 58.8 | 38.6 | 17.2 | -- | -- |
| Visually evaluated points (av.) | 1.3 | 1.8 | 4.25 | 1.1 | 1.45 |
| Blackening/browning-inhibitory index | 102.5 | 113.5 | 151.2 | 97.3 | 106.4 |
| Intensity index for blackening/browning inhibition | -- | -- | 147.7 | -- | 100.0 |

Table 3 (continued)

| Test group | 12 | 13 | 14 | 15 | 16 | 17 |
|---|---|---|---|---|---|---|
| Feed administered | E | R | S | T | U | V |
| Body color (L value) | 63.2 | 64.9 | 64.9 | 64.8 | 62.8 | 67.2 |
| Body color (a value) | 9.4 | -- | -- | -- | -- | -- |
| Black lines observed in meat | -- | 36.1 | 35.3 | 35.5 | 41.3 | 40.2 |
| Visually evaluated points (av.) | 3.25 | 3.35 | 3.5 | 3.4 | 3.2 | 3.85 |
| Blackening/browning-inhibitory index | 122.0 | 124.3 | 125.3 | 124.7 | 121.2 | 129.7 |
| Intensity index for blackening/browning inhibition | -- | -- | -- | -- | -- | -- |

Table 3 (continued)

| Test group | 18 | 19 | 20 | 21 | 22 |
|---|---|---|---|---|---|
| Feed administered | W | X | Y | Z | Z* |
| Body color (L value) | 62.9 | 63.9 | 64.2 | 66.9 | 53 |
| Body color (a value) | -- | -- | -- | -- | -- |
| Black lines observed in meat | 40.5 | 39.1 | 37.2 | 34.9 | 44.2 |
| Visually evaluated points (av.) | 3.15 | 3.3 | 3.45 | 3.6 | 1.3 |
| Blackening/browning-inhibitory index | 121.4 | 123.4 | 124.9 | 129.2 | 102.3 |
| Intensity index for blackening/browning inhibition | -- | -- | -- | -- | 100.0 |

*: Comparative Example.

As will be clear from the foregoing data listed in Table 3, the test group 4 has an L value clearly higher than that observed for the test group 1 and this indicates that the blackening of the body surface color could be inhibited by the addition of maslinic acid. Moreover, the test group 4 shows a blackening/browning-inhibitory effect higher than that observed for the group 2 to which kojic acid is administered, at the same dose, the kojic acid having been known as a substance possessing such an effect. Further, in the test group 3, when 0.001% of kojic acid was administered, the blackening of the body color was never inhibited, but in the test group 5, a high blackening/browning-inhibitory effect was observed although the dose of maslinic acid was identical. In addition, in case where ursolic acid was used in the test group 6, the blackening was strongly inhibited as compared with the test group 2 in which kojic acid was used. In case where vitamins C and E known as antioxidants were simultaneously used, there was observed a slight blackening/browning-inhibitory effect as will be seen from the results observed for the test group 7. On the other hand, it is clear from the results observed for the test group 8 that when these antioxidants are used in combination with kojic acid, there is observed a synergistic blackening/browning-inhibitory effect, while it is clear from the results observed for the test group 9 that the simultaneous use of the antioxidants with maslinic acid would result in a more conspicuous synergistic blackening/browning-inhibitory effect. This would also be confirmed when comparing the results observed for the test group 22 with those observed for the test group 9.

Moreover, regarding the black lines present in the fish meat, the results observed for the test groups 1 to 3 clearly indicate that the formation thereof is inhibited by the administration of kojic acid, but there is not observed any such effect at a concentration of 0.001%. On the other hand, the results observed for the test groups 4 and 5 clearly indicate that the amount of black lines in the meat is considerably reduced by the administration of maslinic acid and the results observed for the test group 16 clearly indicate that the feed of the present invention shows its desired effect even at a low content or that maslinic acid not only inhibits the blackening of the body surface color, but also reduces the overall length of the black lines. As will be seen from the results observed for the test group 6, the use of ursolic acid leads to the same results observed when using maslinic acid. Moreover, the results observed for the test groups 7 to 9 indicate that the effect of the present invention is substantially improved by the simultaneous use of an antioxidant and that the feed containing maslinic acid shows the desired effect higher than that observed when using kojic acid.

In addition, in case where astaxanthin known as a redyeing agent is administered, the redness is conspicuously improved in the test group 12 according to the visual observation (the results are not listed in Table).

Moreover, the extract of Preparation Example 1, the concentrate of Preparation Example 1 and the crude maslinic acid fractionated product of Preparation Example 2 were incorporated into the samples used in test groups 18, 19 and 20, respectively, as a blackening/browning-inhibitory component and it could be confirmed that these substances showed blackening/browning-inhibitory effects like the feed containing maslinic acid. It is also clear from the results observed for the test group 17 that the use of olive lees containing maslinic acid may likewise show the desired effect of the present invention. Effective components having different degrees of concentration and/or purification are incorporated into the feeds used in the test groups 18 to 20 and the results observed for these test groups indicate that the extract of highly concentrated and/or purified shows the desired effect at a smaller amount. This fact indicates that when administering extracts containing the same amount of maslinic acid, the higher the degrees of concentration and/or purification, the clearer and more distinct the resulting effect. Further it is also confirmed that the effective component of the present invention shows a higher effect in the coexistence of genistin as a flavonoid compound.

Regarding the blackening/browning-inhibitory index, all of the products of the present invention have such indexes of not less than 115 and this clearly indicates that the products of the invention show excellent effects. Similarly, they show favorable blackening/browning-inhibitory effects even in the visual evaluation. In addition, the results of the visual evaluation are well correlated with the L values.

Now, referring to the intensity index for blackening/browning-inhibition, all of the products of the invention have intensity indexes for blackening/browning-inhibition of not less than 110 when comparing the results observed for the test group 2 with those observed for the test groups 4 and 6; those observed for the test group 3 with those observed for the test group 5; and those observed for the test group 22 with those observed for the test group 9. As a result, it is recognized that the products of the invention show the desired effect higher than that observed for kojic acid.

Incidentally, the results observed for the test groups 13 and 14 clearly indicate that the product according to the present invention can show the desired effect in both of cases where the products mainly comprise animal proteins and vegetable proteins, respectively.

Example of Feed Production

Feeds for shrimps were prepared using various additives in rates specified in the following Table 4. In these feeds F and H, a commercially available feed was used as a basic feed. This commercially available feed is a solid feed (in the form of pellets) for cultivating prawns and for general use, which mainly comprises, for instance, fish meal, soybean meal, fish oil and fats derived from plants and necessary and sufficient amounts of vitamins and minerals. In this respect, all of the feeds were once pulverized, followed by admixing with 1% of fish oil, kneading together with an appropriate amount of water, forming into pellets and suction drying the pellets under low temperature conditions. The resulting pellets were used as feeds to be practically administered. Maslinic acid listed in Table 4 was added to the pellets at a proper time during the kneading step of the foregoing ingredients.

Table 4

| | Feed F of the invention | Feed H of Comp. Ex. |
|---|---|---|
| Basic Feed | Mixed feed for prawns | Mixed feed for prawns |
| Maslinic acid | 0.05% | -- |

Example 4: Preparation of Processing Liquid or Solution

Processing liquids were prepared in this Example. Each of the processing liquids has the following basic composition: 3 g of sodium hydrogen carbonate and 45 g of common salt, which were dissolved in one liter of ion-exchanged water. To these basic components, there was added 0.01% by mass of maslinic acid. In this respect, the maslinic acid was first dissolved in ethanol to a concentration of 1% and the resulting solution was then diluted with ion-exchanged water and mixed with the foregoing mixed feed.

Processing liquids were further prepared in order to conduct various evaluations. These liquids were prepared according to the same procedures used in Example 4 except that citric acid, sodium citrate, kojic acid and maslinic acid were used in amounts specified in the following Table 5.

Table 5

| Processing liquid | I* | J* | K* | L* | G | H |
|---|---|---|---|---|---|---|
| Citric acid | -- | 0.06% | 0.06% | 0.06% | 0.06% | 0.06% |
| Sodium citrate | -- | 0.1% | 0.1% | 0.1% | 0.1% | 0.1% |
| Kojic acid | -- | -- | 0.01% | 0.001% | -- | -- |
| Maslinic acid | -- | -- | -- | -- | 0.01% | 0.001% |

*: Comparative Feed

**Example 5**

Then, in this Example, there were conducted prawn-breeding tests and tests for storing the prawns after breeding. Prawns (120 subjects) having an average body weight of 21.7 g were divided into 6 test groups each comprising 20 prawns and the prawns belonging to these test groups were bred over 2 months using the foregoing comparative feed H and feed F of the present invention in the manner detailed in the following Table 6. The feed was fed to the shrimps so that each shrimp could ingest the feed in an amount of about 3% of the body weight per day. After the completion of the breeding, all of the prawns were frozen and stored at -80°C and they were subjected to immersion treatments and then used in storage tests. Five subjects were arbitrarily selected from each test group and used in the storage tests.

**Immersion Treatment**

All of the shrimps were once frozen and then thawed. These shrimps were immersed in the processing liquid prepared in Example 4 for one hour, followed by water drainage of the immersed shrimps, accommodation thereof in a foamed styrol tray, wrapping the tray and then carrying out the storage tests in which the shrimps accommodated in the tray were stored at 4°C for 5 days. Five shrimps were selected from each test group and were used in the storage tests. The storability of these shrimps was evaluated as follows: the most severely blackened sample among those tested herein was graded to be 5, the degree of blackness observed for the sample stored in the frozen state was graded to be 1 and all of the shrimps were rated between 5 to 1 to thus determine an average value for each test group.

Table 6

| Test group | 23 | 24 | 25 | 26 | 27 | 28 | 29 |
|---|---|---|---|---|---|---|---|
| Sample administered | H* | F | H* | H* | H* | H* | H* |
| Processing liquid | I* | I* | J* | K* | L* | G | H |
| Average value | 4.8 | 2 | 4.4 | 3.6 | 4 | 1.6 | 2.4 |

*: Comparative product

The results listed in Table 6 indicate that the blackening of the shrimps during the storage is distinctly inhibited in the shrimps of the test group 24 as compared with those belonging to the test group 23 and that the addition of maslinic acid to the feed to be administered would inhibit the blackening of the subjects. Moreover, the results observed for the test group 25 indicate that the treatment of subjects with an organic acid would permit the slight inhibition of the blackening of the subjects, but the effect is not sufficiently high. As will be seen from the results observed for the test group 26, an additive effect can be recognized by the treatment with kojic acid, but any satisfactory effect cannot be obtained by the use of kojic acid in an amount used in the test group 27. On the other hand, the results observed for the test group 28 indicate that the treatment with maslinic acid permits the considerable inhibition of the blackening of the subjects and maslinic acid clearly shows its effect even at an added amount of 0.001% as will be clear from the results observed for the test group 29.

**Example 6**

Further, the effect of the present invention was also demonstrated using apples as plant. An example thereof will be given below.

Apples for which it had been confirmed that the growing district and the harvesting date thereof were the

same were used in these experiments. Five apples having a diameter of about 11 cm were prepared, the husks thereof were removed and then 6 slices each having a thickness of 0.5 mm and a size of 1 cm square were cut from the flesh of each apple. In this connection, the flesh parts cut out from the apples and used herein were present within 1.5 cm from the husk.

All of the samples cut out from the apples were stored in a 0.5% aqueous solution of common salt and then used in the experiments. Five slices out of the 6 slices of cut out samples were subjected to immersion treatment. The processing liquids listed in the foregoing Table 5 were used herein. The remaining one slice, as a control for the evaluation, was stored in a 0.5% aqueous solution of common salt at 4°C till it was used in the evaluation. The immersion treatment was carried out by sufficiently washing the samples with a common salt solution, followed by the immersion thereof in each processing solution listed in Table 7 for 15 minutes, water-drainage and then allowing to stand at 25°C for 2 hours to evaluate the degree of browning. The browning-inhibitory effect of these samples was evaluated as follows: the most severely browned sample among those allowed to stand was graded to be 5, the degree of brownness observed for the sample stored in the aqueous common salt solution was graded to be 1 and all of the samples were rated between 5 and 1 to thus determine an average value for each immersion treatment.

Table 7

| Test Group | 30 | 31 | 32 | 33 | 34 |
|---|---|---|---|---|---|
| Processing solution | J* | K* | L* | G | H |
| Average value | 5 | 4.2 | 4.4 | 1.4 | 2.2 |

*: Comparative product.

The data listed in Table 7 clearly indicate that the browning was slightly inhibited in the samples of the test group 30 as compared with those belonging to the test group 31 or that the kojic acid-treatment shows an effect, but there is observed almost no effect at an added amount used in the test group 32. On the other hand, the browning was substantially inhibited in the test groups 33 and 34 as compared with Comparative Examples and this clearly indicates that the browning is effectively inhibited by the addition of maslinic acid. Moreover, the inhibitory effect is conspicuous even at a maslinic acid concentration of 0.001%.

Example 7: Preparation of Fertilizer

| Fertilizer I according to the present invention (Oil meal-containing solid fertilizer) | |
|---|---|
| Rapeseed oil meal | 690 g |
| Bone meal as a mineral mixture | 300 g |
| Maslinic acid | 10 g |
| Water | As much as suffices |

The foregoing ingredients or the rapeseed oil meal, bone meal as a mineral mixture and maslinic acid were sufficiently admixed together, water was then added to the resulting mixture to give a rather hard paste and the paste was allowed to stand in the shade. The paste was fermented over one month to thus give an oil meal-containing solid fertilizer.

| Fertilizer J according to the present invention (Oil meal-containing solid fertilizer) | |
|---|---|
| Olive oil meal | 590 g |
| Bone meal | 400 g |
| Ursolic acid | 10 g |
| Water | As much as suffices |

The foregoing ingredients were sufficiently admixed together, water was added to the resulting mixture to give a rather hard paste and then the paste was allowed to stand in the shade. The paste was fermented over one month to thus give an oil meal-containing solid fertilizer. Preparation of Comparative Fertilizer: Comparative Product M

A comparative fertilizer M was prepared according to the same procedures used for the preparation of the fertilizer I of the present invention except that 10 g of kojic acid was substituted for the maslinic acid, in the comparative product M.

**Example 8**

In this Example, the effect of the present invention was likewise examined using plants during growing. An example thereof will be given below.

Eggplant cultivation tests were carried out using 15 planters having a volume of about 20 L. One young plant each of eggplant was cultivated in each one of the planters under the same cultivation conditions such as sunshine duration, fertilizer and water supply over 40 days from the initiation of the cultivation. Six young plants, which were almost the same growth conditions were selected from the foregoing young plants thus cultivated and further divided into two groups (comprising 3 young plants each). The comparative fertilizer M and the fertilizer I of the invention were supplied to the young plants of the corresponding test groups as the additional fertilizer. The plants were additionally fertilized once per two weeks. More specifically, the additional fertilizer comprised spreading 15 g of each fertilizer onto the surface of the soil in each planter and then sufficiently spraying water thereon. Among the eggplants harvested during the duration of 65 to 75 days from the initiation of the cultivation, three eggplants, which were free of any defect and/or damage by worms (worm-eaten spot), were selected for each plant and used for the observation of any browning.

The degree of browning was observed as follows. In other words, each eggplant used in this observation was cut into two pieces along the longitudinal direction thereof and one of the pieces was immersed in a 0.5% aqueous common salt solution. The other piece was allowed to stand in a thermostatic chamber set at a temperature of 25°C for one hour. All of the eggplants were subjected to the same treatment described above, followed by allowing to stand for one hour and subsequent comparison thereof with the piece immersed in the common salt solution to thus observe or evaluate the degree of any browning. The sample clearly undergoing browning was graded to be 3, one partially undergoing browning was graded to be 2, one free of any conspicuous browning was graded to be 1 and one completely free of any browning was graded to be 0. Thus, all of the eggplants were rated between 3 and 0 to thus determine the average value for each test group.

Table 8

| Test Group | 35 | 36 |
|---|---|---|
| Fertilizer for additional fertilization | Comp. Product M | Fertilizer I |
| Average value observed | 2.9 | 1.9 |

The average value of the degree of browning observed for the subjects belonging to the test group 35 is smaller than that observed for the subjects of the test group 36. This clearly indicates that the eggplants cultivated using the pentacyclic triterpenes of the present invention as a fertilizer hardly undergo browning as compared with the usual eggplants.

**Preparation of Fertilizers**

**Feed for Broilers**

A feed for broilers was prepared, which comprised the additives in amounts specified in the following Table 9. In this connection, the extracted product derived from olive used herein was prepared by extracting olive oil expression residue with 30% water-containing ethanol at 55°C for 3 hours, followed by the filtration of the resulting extract and the subsequent concentration of the filtrate to dryness. The maslinic acid content of the extracted product was found to be 9% by mass.

Table 9

| Materials | Composition (%) |
|---|---|
| Corn | 54.90 |
| Milo | 10.00 |
| Soybean meal | 17.48 |
| Fish meal | 9.00 |

Table 9 (continued)

| Materials | Composition (%) |
|---|---|
| Casein | 0.60 |
| Alfalfa meal | 1.00 |
| Beef tallow | 5.20 |
| Methionine | 0.12 |
| Vitamin mixture | 0.10 |
| Mineral mixture | 0.40 |
| Extracted product derived from olive | 1.20 |

**Feed for Fattening Pigs**

A feed for fattening pigs was prepared, which comprised the ingredients in amounts specified in the following Table 10. In this connection, the extracted product derived from olive used herein was prepared by extracting olive oil expression residue with 30% water-containing ethanol at 55°C for 3 hours, followed by the filtration of the resulting extract and the subsequent concentration of the filtrate to dryness. The maslinic acid content of the extracted product was found to be 9% by mass.

Table 10

| Materials | Composition (%) |
|---|---|
| Corn | 64.30 |
| Wheat bran | 9.85 |
| Soybean meal | 22.70 |
| Vitamin mixture | 0.25 |
| Mineral mixture | 1.90 |
| Casein | 0.55 |
| Extracted product derived from olive | 0.45 |

**Feed for Fattening Cattle**

A feed for fattening cattle was prepared, which comprised the ingredients in amounts specified in the following Table 11. In this connection, the extracted product derived from olive used herein was prepared by extracting olive oil expression residue with 30% water-containing ethanol at 55°C for 3 hours, followed by the filtration of the resulting extract and the subsequent concentration of the filtrate to dryness. The maslinic acid content of the extracted product was found to be 9% by mass.

Table 10

| Materials | Composition (%) |
|---|---|
| Corn | 48.80 |
| Flaked barley | 10.00 |
| Wheat bran | 17.00 |
| Defatted rice bran | 10.00 |
| Corn gluten | 3.00 |
| Soybean meal | 7.50 |
| Vitamin mixture | 0.20 |
| Mineral mixture | 2.50 |

Table 10 (continued)

| Materials | Composition (%) |
|---|---|
| Casein | 0.50 |
| Extracted product derived from olive | 0.50 |

## Claims

**1.** A feed comprising a compound selected from the group consisting of pentacyclic triterpenes, physiologically acceptable salts thereof and derivatives thereof, as an effective component.

**2.** The feed of claim 1, wherein the pentacyclic triterpenes is maslinic acid or ursolic acid.

**3.** A feed comprising a defatted product derived from olive plants, an extracted product derived from olive or an extracted oil derived from olive, as an effective component.

**4.** The feed of claim 3, wherein the extracted product derived from olive is one obtained by extracting a defatted product generated in the olive oil manufacturing process with water and/or an organic solvent.

**5.** The feed of claim 1 or 3, wherein it further comprises at least one member selected from the group consisting of antioxidants, organic acids and salts thereof, and phosphoric acid and salts thereof.

**6.** A feed comprising fish meal and/or soybean meal; maslinic acid or ursolic acid as an effective component; and at least one member selected from the group consisting of vitamin C, vitamin E and isoflavone as an antioxidant.

**7.** A fertilizer comprising a compound selected from the group consisting of pentacyclic triterpenes, physiologically acceptable salts thereof and derivatives thereof, as an effective component.

**8.** The fertilizer of claim 7, wherein the pentacyclic triterpenes is maslinic acid or ursolic acid.

**9.** A fertilizer comprising a defatted product derived from olive plants, an extracted product derived from olive or an extracted oil derived from olive, as an effective component.

**10.** The fertilizer of claim 9, wherein the extracted product derived from olive is one obtained by extracting a defatted product generated in the olive oil manufacturing process with water and/or an organic solvent.

**11.** The fertilizer of claim 7 or 9, wherein it further comprises at least one member selected from the group consisting of antioxidants, organic acids and salts thereof, and phosphoric acid and salts thereof.

**12.** A fertilizer comprising maslinic acid or ursolic acid as an effective component; oil meal; and a mineral mixture.

**13.** A melanogenesis-inhibitory agent for animals and plants comprising a compound selected from the group consisting of pentacyclic triterpenes, physiologically acceptable salts thereof and derivatives thereof, as an effective component.

**14.** A melanogenesis-inhibitory agent for animals and plants comprising a defatted product derived from olive plants, an extracted product derived from olive or an extracted oil derived from olive, as an effective component.

**15.** A blackening/browning-inhibitory composition for animals and plants comprising a compound selected from the group consisting of pentacyclic triterpenes, physiologically acceptable salts thereof and derivatives thereof, as an effective component.

**16.** A blackening/browning-inhibitory composition comprising a defatted product derived from olive plants, an extracted product derived from olive or an extracted oil derived from olive, as an effective component.

**17.** The blackening/browning-inhibitory composition of claim 16, wherein the extracted product derived from olive is

one obtained by extracting a defatted product generated in the olive oil manufacturing process with water and/or an organic solvent.

**18.** The blackening/browning-inhibitory composition of claim 15 or 16, wherein it further comprises at least one member selected from the group consisting of antioxidants, organic acids and salts thereof, and phosphoric acid and salts thereof.

**19.** A food or beverage comprising an animal and/or a plant to which a compound selected from the group consisting of pentacyclic triterpenes, physiologically acceptable salts thereof and derivatives thereof, as an effective component is administered or applied till the blackening/browning-inhibitory index thereof is not less than 115.

**20.** A method for preparing a feed or a fertilizer comprising the step of treating olive plants or dried products, pulverized products or defatted products thereof with water and/or an organic solvent to give an extracted product having a total content of pentacyclic triterpenes, physiologically acceptable salts thereof and derivatives thereof ranging from 0.1 to 99.99% by mass.

**21.** A method for preventing or improving the blackening and/or browning of an animal or plant body comprising the step of providing a compound selected from the group consisting of pentacyclic triterpenes, physiologically acceptable salts thereof and derivatives thereof to an animal or a plant.

**22.** A method for preventing or improving the blackening and/or browning of an animal or plant body comprising the steps of:

(a) dissolving a compound selected from the group consisting of pentacyclic triterpenes, physiologically acceptable salts thereof and derivatives thereof in water or a water-containing organic solvent to prepare a solution; and
(b) immersing an animal or a plant in the solution prepared in the step (a).

**23.** The method of claim 22, wherein a compound selected from the group consisting of pentacyclic triterpenes, physiologically acceptable salts thereof and derivatives thereof is administered or applied to the animal or plant to be used in the step (b), prior to the immersion thereof in the solution prepared in the step (a).

**24.** The method of claim 22, wherein in the step (a), maslinic acid, citric acid and sodium citrate are dissolved in water or a water-containing organic solvent to prepare the solution.

**25.** A method for preventing the melanogenesis in an animal or plant body, comprising the step of administering or applying a compound selected from the group consisting of pentacyclic triterpenes, physiologically acceptable salts thereof and derivatives thereof to an animal or a plant.

# INTERNATIONAL SEARCH REPORT

International application No.
PCT/JP02/10102

A. CLASSIFICATION OF SUBJECT MATTER
Int.Cl[7] A23K1/16, C05G3/00, A23L1/30

According to International Patent Classification (IPC) or to both national classification and IPC

B. FIELDS SEARCHED

Minimum documentation searched (classification system followed by classification symbols)
Int.Cl[7] A23K1/16, C05G3/00, A23L1/30

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 10-265328 A (Nippon Flour Mills, Co., Ltd.), 06 October, 1998 (06.10.98), (Family: none) | 1-6,20 |
| X<br>A | JP 6-24885 A (Kokura Synthetic Industries, Ltd.), 01 February, 1994 (01.02.94), (Family: none) | 9-11<br>7,8,12 |
| X<br>A | WO 01/26670 A1 (The Nisshin Oil Mills, Ltd.), 19 April, 2001 (19.04.01), & AU 786600 A & JP 2001-181198 A JP 2001-181197 A & JP 2001-181632 A | 13-18,21-25<br>19 |
| X | JP 58-57307 A (Pola Chemical Industries Inc.), 05 April, 1983 (05.04.83), (Family: none) | 13-18,21-25 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 December, 2002 (16.12.02) | 14 January, 2003 (14.01.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/10102

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

Claims 1 to 6 and 20 relate to feeds (or processes for producing the same).

Claims 7 to 12 and 20 relate to fertilizers (or processes for producing the same).

Claims 13, 14 and 25 relate to melanin formation inhibitors for animals and plants (or methods of preventing melanin formation).

Claims 15 to 18 and 21 to 24 relate to compositions for inhibiting blackening/browning of animals and plants (or methods of inhibiting or improving blackening/browning).

Claim 19 relates to foods and drinks containing animals and plants.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☒ No protest accompanied the payment of additional search fees.

Form PCT/ISA/210 (continuation of first sheet (1)) (July 1998)